# EUROPEAN PATENT SPECIFICATION

(11) **EP 3 905 830 B1**
(45) Date of publication and mention of the grant of the patent: **31.07.2024**
(21) Application number: 20749259.6
(22) Date of filing: 15.01.2020
(51) Int. Cl.: H04W 48/14, H04W 48/12, H04W 74/0833, H04W 88/08

(54) **METHOD AND DEVICE FOR ACQUIRING SYSTEM INFORMATION**
VERFAHREN UND VORRICHTUNG ZUR ERFASSUNG VON SYSTEMINFORMATIONEN
PROCÉDÉ ET DISPOSITIF POUR ACQUÉRIR DES INFORMATIONS DE SYSTÈME

(30) Priority: 31.01.2019 CN 201910101509
(43) Date of publication of application: 03.11.2021
(73) Proprietor: Huawei Technologies Co., Ltd., Longgang District, Shenzhen, Guangdong 518129 (CN)
(72) Inventor: YANG, Chenchen, Shenzhen, Guangdong 518129 (CN); JIN, Yinghao, Shenzhen, Guangdong 518129 (CN); TAN, Wei, Shenzhen, Guangdong 518129 (CN); HAN, Feng, Shenzhen, Guangdong 518129 (CN)
(74) Representative: Gill Jennings & Every LLP
(86) International application number: PCT/CN2020/072306
(87) International publication number: WO 2020/156184

(56) References cited:
- WO-A1-2018/028437
- CN-A- 107 135 502
- CN-A- 108 024 311
- CN-A- 109 121 223
- US-A1- 2018 103 369
- US-A1- 2018 338 277
- US-B2- 9 204 373

## Description

### TECHNICAL FIELD

This application relates to the field of communications technologies, and in particular, to a method and an apparatus for obtaining system information.

### BACKGROUND

To normally access a cell, after completing frequency scanning and downlink synchronization with the cell, a terminal further needs to continue to read one or more types of system information corresponding to the cell. System information of two types: a master information block (Master Information Block, MIB for short) and a system information block type 1 (SystemInformationBlockType 1, SIB 1 for short) is usually periodically broadcast by a base station, and system information blocks (System Information Block, SIB for short) of other types may be selectively periodically broadcast. In a new radio (new radio, NR for short) system, when the terminal finds that some system information is not broadcast, but the terminal needs the system information, the terminal may actively send a request to the base station to obtain the corresponding system information.

In the NR system, abase station may have a separate architecture. To be specific, the base station includes two parts: a centralized unit (central unit, CU for short) and a distributed unit (distributed unit, DU for short). One CU may be connected to a plurality of DUs. For the base station having the separate architecture, if the terminal needs to obtain system information corresponding to cells of the plurality of DUs, the terminal needs to separately send a message 1 (message 1, MSG1 for short) or a radio resource control (radio resource control, RRC for short) system information request (RRCSystemInfoRequest) in a random access procedure to the plurality of DUs, where the RRCSystemInfoRequest is information that may be sent by using a message 3 (message 3, MSG3 for short) in the random access procedure. In addition, the terminal can request system information corresponding to only one cell at a time. Then, each DU reports the system information request of the terminal to the CU through an F1 interface, the CU sends the system information requested by the terminal to the DU through the F1 interface, and the DU forwards the system information requested by the terminal to the terminal. In the foregoing process, air interface signaling overheads between the terminal and the DU and F1 interface signaling overheads are both relatively large.

US9204373B2 provides a system and method for acquisition of neighbor cell information.

US2018103369A1 discloses a method for system information acquisition by a user equipment in a wireless communication network.

US2018338277A1 provide a method for a distributed unit of a base station to broadcast system information in a wireless communication system, and a device supporting the same.

### SUMMARY

Embodiments of this application provide a method and an apparatus for obtaining system information, to reduce signaling overheads.

To achieve the foregoing objective, the embodiments of this application provide the following technical solutions.

According to a first aspect, a method for obtaining system information is provided in accordance with appended claim 1. In a conventional technology, the terminal can request system information corresponding to only one cell at a time. Compared with an existing manner of obtaining system information corresponding to a cell, in the method according to the first aspect, the terminal can obtain system information corresponding to a plurality of cells at a time, thereby reducing air interface signaling overheads.

In a possible implementation, the first request includes information used to indicate the N cells and information used to indicate a type of system information corresponding to each of the N cells, or the first request includes information used to indicate the N cells. In this possible implementation, the access network element can determine the system information that corresponds to each cell and that is requested by the terminal.

In a possible implementation, the first response includes information used to indicate the M cells and system information corresponding to each of the M cells, or the first response includes information used to indicate the M cells, information used to indicate a type of system information corresponding to each of the M cells, and the system information corresponding to each of the M cells. In this possible implementation, the terminal can determine the requested system information corresponding to each cell.

In a possible implementation, the access network element is an access network device, or the access network element is a DU.

In a possible implementation, the terminal is in idle mode, and the first request is MAC CE signaling, a message 1 in a random access procedure, or a message 3 in a random access procedure; or the terminal is in connected mode, and the first request is RRC signaling or MAC CE signaling.

According to a second aspect, a method for obtaining system information is provided in accordance with appended claim 6.

In a conventional technology, the terminal can request system information corresponding to only one cell at a time. Compared with an existing manner of obtaining system information corresponding to a cell, in the method according to the second aspect, the terminal can obtain system information corresponding to a plurality of cells at a time, thereby reducing air interface signaling overheads.

In a possible implementation, the first request and the second request include information used to indicate the N cells and information used to indicate a type of system information corresponding to each of the N cells, or the first request and the second request include information used to indicate the N cells. In this possible implementation, the first CU can determine the system information that corresponds to each cell and that is requested by the terminal.

In a possible implementation, the first response includes information used to indicate the M cells and system information corresponding to each of the M cells; or information used to indicate the M cells, information used to indicate a type of system information corresponding to each of the M cells, and the system information corresponding to each of the M cells; and the second response includes the information used to indicate the M cells and the system information corresponding to each of the M cells; or the second response includes the information used to indicate the M cells and the information used to indicate the type of the system information corresponding to each of the M cells; or the second response includes the information used to indicate the M cells, the information used to indicate the type of the system information corresponding to each of the M cells, and the system information corresponding to each of the M cells. In this possible implementation, the terminal can determine the requested system information corresponding to each cell.

In a possible implementation, the terminal is in idle mode, and the first request is a message 3 in a random access procedure; or the terminal is in connected mode, and the first request is RRC signaling.

According to a further aspect, a method for obtaining system information is provided in accordance with appended claim 10.

In a conventional technology, the terminal can request system information corresponding to only one cell at a time. Compared with an existing manner of obtaining system information corresponding to a cell, in the method according to the fourth aspect, the terminal can obtain system information corresponding to a plurality of cells at a time, thereby reducing air interface signaling overheads.

In a possible implementation, the second request includes information used to indicate the N cells and information used to indicate a type of system information corresponding to each of the N cells, or the second request includes information used to indicate the N cells. In this possible implementation, the first CU can determine the system information that corresponds to each cell and that is requested by the terminal.

In a possible implementation, the second response includes information used to indicate the M cells and system information corresponding to each of the M cells; or the second response includes information used to indicate the M cells and information used to indicate a type of system information corresponding to each of the M cells; or the second response includes information used to indicate the M cells, information used to indicate a type of system information corresponding to each of the M cells, and the system information corresponding to each of the M cells. In this possible implementation, the DU can determine the system information that corresponds to each cell and that is requested by the terminal.

In a possible implementation, before the first CU sends a second response to the DU based on the second request, the method further includes: The first CU locally obtains, based on the second request, system information corresponding to one or more cells.

In a possible implementation, before the first CU sends a second response to the DU based on the second request, the method further includes: The first CU sends a third request to one or more DUs based on the second request, where the third request is used to request the system information corresponding to the one or more cells. The first CU receives a third response from the one or more DUs, where the third response includes system information corresponding to one or more cells.

In a possible implementation, before the first CU sends a second response to the DU based on the second request, the method further includes: The first CU sends a fourth request to the second CU based on the second request, where the fourth request is used to request the system information corresponding to the one or more cells. The first CU receives a fourth response from the second CU, where the fourth response includes system information corresponding to one or more cells.

According to a further aspect, an apparatus for obtaining system information is provided in accordance with appended claim 12.

In a possible implementation, the first request includes information used to indicate the N cells and information used to indicate a type of system information corresponding to each of the N cells, or the first request includes information used to indicate the N cells.

In a possible implementation, the first response includes information used to indicate the M cells and system information corresponding to each of the M cells, or the first response includes information used to indicate the M cells, information used to indicate a type of system information corresponding to each of the M cells, and the system information corresponding to each of the M cells.

In a possible implementation, the access network element is an access network device, or the access network element is a DU.

In a possible implementation, the apparatus for obtaining system information is in idle mode, and the first request is MAC CE signaling, a message 1 in a random access procedure, or a message 3 in a random access procedure; or the apparatus for obtaining system information is in connected mode, and the first request is RRC signaling or MAC CE signaling.

According to a further aspect, an apparatus for obtaining system information is provided in accordance with appended claim 13.

In a possible implementation, the first request and the second request include information used to indicate the N cells and information used to indicate a type of system information corresponding to each of the N cells, or the first request and the second request include information used to indicate the N cells.

In a possible implementation, the first response includes information used to indicate the M cells and system information corresponding to each of the M cells; or information used to indicate the M cells, information used to indicate a type of system information corresponding to each of the M cells, and the system information corresponding to each of the M cells; and the second response includes the information used to indicate the M cells and the system information corresponding to each of the M cells; or the second response includes the information used to indicate the M cells and the information used to indicate the type of the system information corresponding to each of the M cells; or the second response includes the information used to indicate the M cells, the information used to indicate the type of the system information corresponding to each of the M cells, and the system information corresponding to each of the M cells.

In a possible implementation, the terminal is in idle mode, and the first request is a message 3 in a random access procedure; or the terminal is in connected mode, and the first request is RRC signaling.

According to a further aspect, an apparatus for obtaining system information is provided in accordance with appended claim 14.

In a possible implementation, the second request includes information used to indicate the N cells and information used to indicate a type of system information corresponding to each of the N cells, or the second request includes information used to indicate the N cells.

In a possible implementation, the second response includes information used to indicate the M cells and system information corresponding to each of the M cells; or the second response includes information used to indicate the M cells and information used to indicate a type of system information corresponding to each of the M cells; or the second response includes information used to indicate the M cells, information used to indicate a type of system information corresponding to each of the M cells, and the system information corresponding to each of the M cells.

In a possible implementation, the processing unit is further configured to locally obtain, based on the second request, system information corresponding to one or more cells.

In a possible implementation, the processing unit is further configured to send a third request to one or more DUs based on the second request by using the communications unit, where the third request is used to request the system information corresponding to the one or more cells. The processing unit is further configured to receive a third response from the one or more DUs by using the communications unit, where the third response includes system information corresponding to one or more cells.

In a possible implementation, the processing unit is further configured to send a fourth request to a second CU based on the second request by using the communications unit, where the fourth request is used to request the system information corresponding to the one or more cells. The processing unit is further configured to receive a fourth response from the second CU by using the communications unit, where the fourth response includes system information corresponding to one or more cells.

According to a further aspect, a computer-readable storage medium is provided in accordance with appended claim 15.

### BRIEF DESCRIPTION OF DRAWINGS

FIG. 1 is a schematic composition diagram of a network architecture according to an embodiment of this application;
FIG. 2 is a flowchart of a method for obtaining system information according to an embodiment of this application;
FIG. 3 to FIG. 5 each are a schematic diagram of a format of information included in a request according to an embodiment of this application;
FIG. 6 and FIG. 7 each are a schematic diagram of a format of information included in a response according to an embodiment of this application;
FIG. 8 to FIG. 10 each are a flowchart of a method for obtaining system information according to an embodiment of this application;
FIG. 11 is a schematic composition diagram of a network architecture according to an embodiment of this application;
FIG. 12 and FIG. 13 each are a flowchart of a method for obtaining system information according to an embodiment of this application;
FIG. 14 is a schematic composition diagram of a network architecture according to an embodiment of this application;
FIG. 15 and FIG. 16 each are a flowchart of a method for obtaining system information according to an embodiment of this application;
FIG. 17 to FIG. 19 each are a schematic composition diagram of an apparatus for obtaining system information according to an embodiment of this application; and
FIG. 20 is a schematic diagram of a hardware structure of a terminal according to an embodiment of this application.

### DESCRIPTION OF EMBODIMENTS

The following describes the technical solutions in embodiments of this application with reference to the accompanying drawings in the embodiments of this application. In the descriptions of this application, "/" means "or" unless otherwise specified. For example, A/B may represent A or B. The term "and/or" in this specification describes only an association relationship for describing associated objects and represents that there may be three relationships. For example, A and/or B may represent the following three cases: Only A exists, both A and B exist, and only B exists. In addition, in the description of this application, "a plurality of" means two or more unless otherwise specified.

In addition, to clearly describe the technical solutions in the embodiments of this application, words such as "first" and "second" are used in the embodiments of this application to distinguish between same items or similar items whose functions and functions are basically the same. A person skilled in the art may understand that words such as "first", "second", or the like does not limit a quantity and a performing sequence, and words such as "first", "second", or the like are not limited to be necessarily different.

The technical solutions in the embodiments of this application may be applied to various communications systems, for example, orthogonal frequency division multiple access (orthogonal frequency-division multiple access, OFDMA for short), single carrier frequency division multiple access (single carrier FDMA, SC-FDMA for short), and other systems. The terms "system" and "network" can be interchanged with each other. A radio technology such as evolved universal terrestrial radio access (evolved universal terrestrial radio access, E-UTRA for short) or ultra mobile broadband (ultra mobile broadband, UMB for short) may be implemented in an OFDMA system. The E-UTRA is an evolved release of a universal mobile telecommunications system (universal mobile telecommunications system, UMTS for short). The 3rd generation partnership project (3rd generation partnership project, 3GPP for short) uses a new release of the E-UTRA in long term evolution (long term evolution, LTE for short) and various versions evolved based on LTE. A 5th generation (5th-generation, 5G for short) communications system and NR are next-generation communications systems that are under research. In addition, the communications system may further be used in a future-oriented communications technology, and is applicable to the technical solutions provided in the embodiments of this application.

Network elements in the embodiments of this application include an access network device and a terminal.

The terminal may also be referred to as user equipment (user equipment, UE for short), a terminal device, an access terminal, a subscriber unit, a subscriber station, a mobile station, a remote station, a remote terminal, a mobile device, a user terminal, a wireless communications device, a user agent, a user apparatus, or the like. The terminal may be a drone, an internet of things (internet of things, IoT for short) device (for example, a sensor, an electricity meter, or a water meter), a vehicle-to-everything (vehicle-to-everything, V2X for short) device, a station (station, ST for short) in a wireless local area network (wireless local area networks, WLAN for short), a cellular phone, a cordless phone, a session initiation protocol (session initiation protocol, SIP for short) phone, a wireless local loop (wireless local loop, WLL for short) station, a personal digital assistant (personal digital assistant, PDA for short) device, a handheld device with a wireless communications function, a computing device, or another processing device connected to a wireless modem, a vehicle-mounted device, or a wearable device (which may also be referred to as a wearable intelligent device). The terminal may alternatively be a terminal in a next generation communications system, for example, a terminal in a 5G communications system, a terminal in a future evolved public land mobile network (public land mobile network, PLMN for short), or a terminal in an NR communications system.

The access network device may be macro base stations, micro base stations (which is also referred to as small cells), relay stations, access points (access point, AP for short), and the like in various forms, or may include control nodes in various forms, for example, a network controller. The control node may be connected to a plurality of base stations, and configure resources for a plurality of terminals covered by the plurality of base stations. In systems using different radio access technologies, a device having a base station function may have different names. For example, the device may be referred to as a base transceiver station (base transceiver station, BTS for short) in a global system for mobile communications (global system for mobile communication, GSM for short) or a code division multiple access (code division multiple access, CDMA for short) network, may be referred to as a NodeB (NodeB) in wideband code division multiple access (wideband code division multiple access, WCDMA for short), may be referred to as an evolved NodeB (evolved NodeB, eNB or eNodeB for short) in an LTE system, and may be referred to as a next generation NodeB (next generation node base station, gNB for short) in a 5G communications system or an NR communications system. A specific name of the base station is not limited in this application. Alternatively, the access network device may be a radio controller in a cloud radio access network (cloud radio access network, CRAN for short) scenario, an access network device in a future evolved PLMN network, a transmission reception point (transmission and reception point, TRP for short), or the like.

In the R15 communications standard, a split architecture is defined for an access network device (for example, a gNB) in NR. In other words, the access network device is split, based on a protocol stack function, into two parts: a CU and a DU. The CU has functions of a service data adaptation protocol (service data adaptation protocol, SDAP for short) layer, a packet data convergence protocol (packet data convergence protocol, PDCP for short) layer, and an RRC layer. The DU has functions of a radio link control (radio link control, RLC for short) layer, a media access control (medium access control, MAC for short) layer, and a physical (Physical, PHY for short) layer.

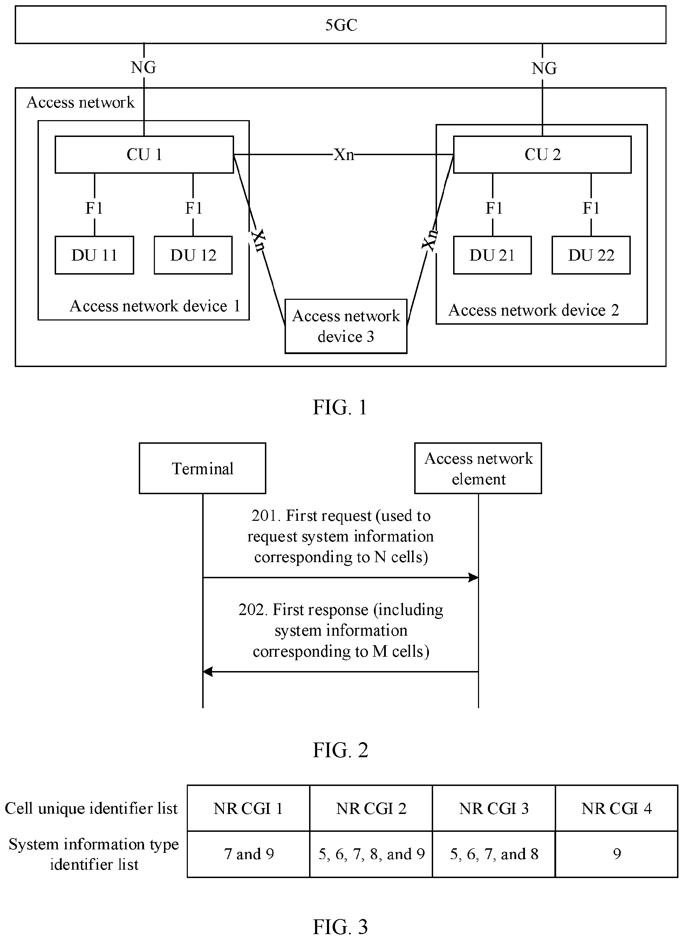

One access network device may include one CU and a plurality of DUs, and the CU and the DUs are connected by using an F1 interface. The CU is connected to another access network device by using an Xn interface. The CU is connected to a core network (5G core, 5GC for short) of a 5G communications network by using an NG interface. It is specified in the standard that one CU may be connected to a plurality of DUs, and one DU can be connected to only one CU. In an implementation process, in consideration of system stability, one DU may be connected to a plurality of CUs. An access network includes a plurality of access network devices. The plurality of access network devices may all use a split architecture, or may all use a centralized architecture (to be specific, may be access network devices that are not split into two parts: a CU and a DU), or may partially use a split architecture and partially use a centralized architecture. For example, referring to FIG. 1, an access network device 1 and an access network device 2 use a split architecture, and an access network device 3 uses a centralized architecture. A DU and an access network device may cover one cell, or may cover a plurality of cells. For example, referring to Table 1, Table 1 shows a correspondence between a DU, an access network device, and a covered cell in the network architecture shown in FIG. 1.

**Table 1**

| Access network device 1 | | Access network device 2 | | Access network device 3 |
|---|---|---|---|---|
| DU 11 | DU 12 | DU 21 | DU 22 | |
| Cell 1 and cell 2 | Cell 3 | Cell 4 | Cell 5 and cell 6 | Cell 7, cell 8, and cell 9 |

A system architecture and a service scenario that are described in the embodiments of this application are intended to describe the technical solutions in the embodiments of this application more clearly, and do not constitute a limitation to the technical solutions provided in the embodiments of this application. A person of ordinary skill in the art may know that with evolution of the network architecture and emergence of new service scenarios, the technical solutions provided in the embodiments of this application are also applicable to similar technical problems.

To make the embodiments of this application clearer, the following briefly describes content of a part about system information in the method provided in the embodiments of this application.

### 1. System information

The system information is mainly used to notify a terminal of configuration information of a cell, so that the terminal accesses the cell and correctly works in the cell. In the 3GPP standard, the system information is classified into minimum (Minimum) system information and other (Other) system information. The foregoing minimum system information includes two types of information: MIB and SIB1. The foregoing other system information includes SIB2 and higher system information. In an LTE system, MIB, SIB 1, SIB2 to SIB21, and the like are already defined. Each piece of system information includes a set of a series of parameters related to a function. The MIB includes some parameters that are limited in quantity but are most important and most frequently sent and used, for example, uplink and downlink bandwidths, a physical hybrid automatic repeat request (automatic repeat-request, ARQ for short) indicator channel (physical hybrid-ARQ indicator channel, PHICH for short) parameter, a system frame number (system frame number, SFN for short), and the like, and the MIB also includes a parameter required by the terminal to obtain the SIB 1. The SIB 1 in LTE mainly includes information related to cell selection and camping, such as a PLMN, a cell barring state, a cell selection parameter, and a closed subscriber group (closed subscriber group, CSG for short) identifier. In addition, the SIB1 further includes scheduling information of another SIB, and the terminal obtains the SIB2 and higher system information based on the information in the SIB 1. For another example, the SIB2 in LTE mainly includes common radio resource configuration information that is of a cell and that is applicable to terminals. The SIB9 in LTE includes name information of a home NodeB. In an NR communications system, because the NR standard is still being continuously promoted, only system information such as MIB, SIB 1, and SIB2 to SIB9 is defined in an existing standard. Compared with the LTE system, a SIBx in the NR system does not correspond to a SIBx in LTE. For example, the SIB 1 in NR corresponds to functions of the SIB 1 and the SIB2 in LTE, and the SIB2 to the SIB9 in NR correspond to functions of the SIB3 to the SIB6, the SIB 10 to the SIB12, and the SIB16 in LTE respectively. In addition, system information with a same function in LTE and NR may include or may not include a same information element.

In this embodiment of this application, x in SIBx is a SIB type, SIBx is a SIB of type x, and x in the type x is an identifier (which may also be referred to as an index or a sequence number) of a type. For example, SIB5 refers to a SIB of type 5, type 5 indicates a type whose identifier is 5, and x is an integer.

### 2. Method for obtaining system information

To normally access a cell, after completing frequency scanning and downlink synchronization with the cell, a terminal further needs to continue to read one or more types of system information corresponding to the cell. The two types of system information, that is, the MIB and the SIB 1, are usually periodically broadcast by an access network element, and other types of SIBs may be selectively periodically broadcast. In LTE, a terminal in idle (idle) mode can obtain system information periodically broadcast in a timely manner whenever the terminal is powered on. The MIB is broadcast on a physical broadcast channel (physical broadcast channel, PBCH for short), and other types of system information (SIB1 and other SIBs that need to be broadcast) are broadcast on a physical downlink shared channel (physical downlink shared channel, PDSCH for short). The MIB includes time-frequency information for sending the SIB 1. After receiving the MIB on the PBCH channel, the terminal receives the SIB 1 on the PDSCH based on the time-frequency information indicated in the MIB. The SIB 1 indicates time-frequency information for scheduling SIB2 to SIBx. After reading the SIB 1, the terminal receives another SIB on the PDSCH based on the time-frequency information indicated in the SIB 1.

Compared with LTE, NR introduces a new method for obtaining system information by a terminal: on-demand (On-Demand) obtaining. Specifically, the system information may be obtained by using an on-demand request (On-Demand Request). That is, when the terminal finds that some system information is not broadcast and the terminal needs the system information, the terminal may actively send a request to the access network element, and the access network element may further send the system information to the terminal. For a terminal in connected (connected) mode, the access network element may further send system information by using RRC signaling. For example, the RRC signaling may be RRC reconfiguration (RRCReconfiguration) signaling.

In the R15 standard, for the terminal in idle mode, two manners in which the terminal obtains system information on demand are as follows. 1. The terminal sends a preamble (Preamble) in an MSG1, and there is a mapping relationship between the preamble and a type of system information required by the terminal. After receiving the MSG1, an access network element may parse out, based on the preamble carried in the MSG1 and the mapping relationship, system information required by the terminal, and further sends the system information required by the terminal to the terminal. 2. The terminal sends RRCSystemInfoRequest signaling to an access network element to request required system information, where the RRCSystemInfoRequest signaling carries an information element of a type of the system information required by the terminal, and the access network element further sends the system information required by the terminal to the terminal. The RRCSystemInfoRequest is information that may be sent by using an MSG3 in a random access procedure.

For example, a concept of a CSG cell is defined in LTE, and only a terminal with a corresponding permission can access the CSG cell. To access a CSG cell, a terminal needs to first determine whether a cell is a CSG cell. This is implemented by receiving a SIB 1 by the terminal. The SIB 1 in LTE includes parameters: a CSG indication (CSG indication) identifying whether a corresponding cell is a CSG cell, and a CSG ID (CSG Identity) identifying an ID of a corresponding CSG cell. A typical application scenario of CSG is a home NodeB scenario. If a user accesses a home NodeB in a manual selection (Manual CSG selection) manner, the terminal needs to display, in a list, names of available home NodeBs around the user. In LTE, a name of a home NodeB is included in a SIB9 (Note: System information specifically including the name of the home NodeB is not defined in the NR standard). In conclusion, a procedure of displaying the list of home NodeBs by the terminal may be summarized as follows: After determining, by receiving a SIB 1, that a cell is a CSG cell, the terminal receives a SIB9 from a PDSCH channel of the cell based on time-frequency information of the SIB9 indicated in the SIB 1. In this way, a name of a corresponding home NodeB is read from the SIB9 and is added to the list of available home NodeBs. However, system information including a name of a home NodeB is not always broadcast. Therefore, when a user requires a name of a home NodeB, a SIB including the name of the home NodeB may be obtained in an on-demand manner in NR.

The user can send an on-demand request to obtain required system information that is not broadcast. For a split base station architecture, if the terminal needs to know on-demand system information in a plurality of DUs, the terminal needs to separately send an MSG1, an RRCSystemInfoRequest, or another RRC request in a random access procedure to the plurality of DUs, and the terminal can request system information corresponding to only one cell at a time. Then, each DU reports a system information request of the terminal to a CU through an F1 interface, the CU sends corresponding system information to the DU through the F1 interface, and the DU forwards the system information to the terminal. It can be learned that in the foregoing process, a similar signaling exchange procedure is performed between the terminal and the plurality of DUs and between the plurality of DUs and the CU, and signaling exchange efficiency is relatively low. Similarly, for a centralized base station architecture, if a user needs to obtain on-demand system information of a plurality of base stations, the user needs to exchange signaling with each base station. In addition, the terminal can request system information corresponding to only one cell at a time, and exchange efficiency is relatively low.

An embodiment of this application provides a method for obtaining system information. The method may be used to obtain system information corresponding to a common cell, or may be used to obtain system information corresponding to a CSG cell/closed access group (closed access group, CAG for short) cell. The system information corresponding to the CSG cell may include information such as a CSG indication (which is information used to indicate whether the cell is a CSG cell, and specifically, may also be another name), a CSG ID (which is used to indicate a CSG cell, and specifically, may also be another name), and a name of a home NodeB. The system information corresponding to the CAG cell may include information such as a CAG indication (which is information used to indicate whether the cell is a CAG cell, and specifically, may also be another name), a CAG ID (which is used to indicate a CAG cell, and specifically, may also be another name), and a name of a CAG base station. A common cell is a cell other than a CSG cell and a CAG cell.

As shown in FIG. 2, the method for obtaining system information includes the following steps.

201. A terminal sends a first request to an access network element, where the first request is used to request system information corresponding to N cells, and N is an integer greater than 1.

Optionally, the access network element is an access network device, or the access network element is a DU.

The N cells may be cells covered by a same access network device. For example, referring to Table 1, it is assumed that N=3, and the N cells may be the cell 7, the cell 8, and the cell 9 that are covered by the access network device 3.

Alternatively, the N cells may be cells covered by different access network devices. For example, referring to Table 1, it is assumed that N=3, and the N cells may be the cell 7 and the cell 8 that are covered by the access network device 3 and the cell 1 that is covered by the access network device 1.

The N cells may be cells covered by a same DU. For example, referring to Table 1, it is assumed that N=2, and the N cells may be the cell 1 and the cell 2 that are covered by the DU 11.

The N cells may also be cells covered by different DUs, and the different DUs may be connected to a same CU, or may be connected to different CUs. For example, referring to Table 1, it is assumed that N=3, and when different DUs are connected to different CUs, the N cells may be the cell 1 and the cell 2 that are covered by the DU 11 and the cell 4 that is covered by the DU 21. When different DUs are connected to a same CU, the N cells may be the cell 1 and the cell 2 that are covered by the DU 11 and the cell 3 that is covered by the DU 12.

In this embodiment of this application, system information corresponding to a cell is system information that is not received but needs to be obtained by the terminal. In other words, the system information corresponding to the cell is on-demand system information of the cell.

Types of system information corresponding to different cells in the N cells may be the same or may be different. For example, when the types of system information corresponding to different cells in the N cells are the same, if the N cells are a cell 1 and a cell 2, types of system information corresponding to the cell 1 and the cell 2 may both be a type 5 of a SIB. When the types of system information corresponding to different cells in the N cells are different, if the N cells are a cell 1 and a cell 2, a type of system information corresponding to the cell 1 may be a type 5 of a SIB, and a type of system information corresponding to the cell 2 may be a type 7 of a SIB.

Quantities of pieces of system information corresponding to different cells in the N cells may be the same or may be different. For example, when the quantities of pieces of system information corresponding to different cells in the N cells are the same, if the N cells are a cell 1 and a cell 2, system information corresponding to the cell 1 may be a SIB5, and system information corresponding to the cell 2 may be a SIB9. When the quantities of pieces of system information corresponding to different cells in the N cells are different, if the N cells are a cell 1 and a cell 2, system information corresponding to the cell 1 may be a SIB5 and a SIB7, and system information corresponding to the cell 2 may be a SIB9.

202. The terminal receives a first response from the access network element, where the first response includes system information corresponding to M cells, the M cells include at least a part of the N cells, and M is an integer greater than 0.

In a conventional technology, the terminal can request system information corresponding to only one cell at a time. Compared with an existing manner of obtaining system information corresponding to a cell, in the method according to this embodiment of this application, the terminal can obtain system information corresponding to a plurality of cells at a time, thereby improving signaling exchange efficiency and reducing air interface signaling overheads.

Optionally, the first request includes information used to indicate the N cells and information used to indicate a type of system information corresponding to each of the N cells. Alternatively, the first request includes information used to indicate the N cells. Alternatively, the first request includes information used to indicate a type of system information corresponding to each of the N cells. Alternatively, the first request includes indication information and information used to indicate a type of system information, where the indication information is used to indicate whether system information corresponding to a plurality of cells is requested.

When the first request includes the information used to indicate the N cells and the information used to indicate the type of the system information corresponding to each of the N cells, there is a one-to-one correspondence between the information used to indicate the N cells and the information used to indicate the type of the system information corresponding to each of the N cells.

When the first request includes only the information used to indicate the N cells, a type of system information corresponding to each of the N cells may be preset or may be carried in another message to the access network element.

When the first request includes the information used to indicate the type of the system information corresponding to each of the N cells, information used to indicate the N cells may be preset or may be carried in another message to the access network element.

When the first request includes the indication information and the information used to indicate the type of the system information, after receiving the first request, the access network element may send, based on a product, system information corresponding to one or more cells to the terminal. For example, when the first request includes the indication information and a type of system information (for example, a SIB9 in LTE) that carries information about a home NodeB, the access network element may send system information that carries the information about the home NodeB and that corresponds to all CSG cells to the terminal. The indication information may be indicated by using a value of one bit, and different values of the bit indicate different meanings. For example, when a value of the bit is 1, the indication information is used to indicate that the system information corresponding to the plurality of cells is requested; or when a value of the bit is 0, the indication information is used to indicate that system information corresponding to a single cell is requested. Certainly, the indication information may alternatively be indicated by using a plurality of bits. This is not specifically limited in this embodiment of this application.

In this embodiment of this application, information used to indicate a cell is information that uniquely identifies the cell, and may be referred to as a unique identifier of the cell. A unique identifier of a cell may be a cell global identifier (cell global identifier, CGI for short) of the cell. In NR, the CGI may be referred to as an NR CGI. For a CSG cell, a unique identifier of the CSG cell may be a CSG ID. For a CAG cell, a unique identifier of the CAG cell may be a CAG ID. When the information used to indicate a cell is a unique identifier of the cell, the information used to indicate the N cells may be a cell unique identifier list, and the cell unique identifier list includes unique identifiers of the N cells.

In this embodiment of this application, information used to indicate a type of system information corresponding to a cell may be an identifier of the type of the system information corresponding to the cell. Information used to indicate types of the system information corresponding to the N cells may be a system information type identifier list, and the system information type identifier list includes the types of the system information corresponding to the N cells.

Optionally, the terminal is in idle mode, and the first request is MAC control element (MAC control element, MAC CE for short) signaling, a message 1 in a random access procedure, or a message 3 in a random access procedure. Alternatively, the terminal is in connected mode, and the first request is RRC signaling or MAC CE signaling.

For example, the message 3 may be an RRCSystemInfoRequest.

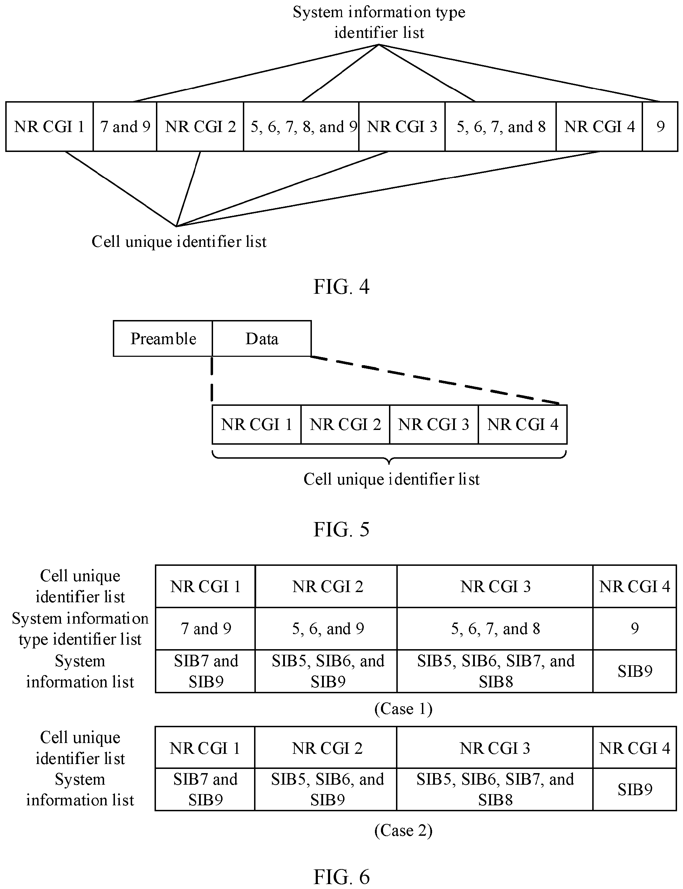

When the first request is the RRCSystemInfoRequest, the cell unique identifier list and the system information type identifier list may be in a format shown in FIG. 3, or may be in a format shown in FIG. 4.

When the first request is the message 1, the cell unique identifier list may be in a format shown in FIG. 5, that is, corresponding data is added after a preamble, where the data is used to carry the cell unique identifier list. In this case, there is a mapping relationship between the preamble and a type of system information required by the terminal. The preamble may have a mapping relationship with one type of the system information, or may have a mapping relationship with a plurality of types of the system information. It is assumed that unique identifiers of a cell 1, a cell 2, a cell 3, and a cell 4 are respectively an NR CGI 1, an NR CGI 2, an NR CGI 3, and an NR CGI 4 in FIG. 5. In a possible implementation, there may be a mapping relationship between the preamble and a type 5 of the system information. In this case, the example shown in FIG. 5 may mean that the terminal needs to obtain a SIB5 corresponding to each of the cell 1, the cell 2, the cell 3, and the cell 4. In another possible implementation, there may be a mapping relationship between the preamble and a type 5 and a type 6 of the system information. In this case, the example shown in FIG. 5 may mean that the terminal needs to obtain a SIB5 and a SIB6 corresponding to each of the cell 1, the cell 2, the cell 3, and the cell 4.

Optionally, the first response includes information used to indicate the M cells and system information corresponding to each of the M cells, or the first response includes information used to indicate the M cells, information used to indicate a type of system information corresponding to each of the M cells, and the system information corresponding to each of the M cells.

When the first response includes the information used to indicate the M cells and the system information corresponding to each of the M cells, there is a one-to-one correspondence between the information used to indicate the M cells and the system information corresponding to each of the M cells. When the first response includes the information used to indicate the M cells, the information used to indicate the type of the system information corresponding to each of the M cells, and the system information corresponding to each of the M cells, there is a one-to-one correspondence between the information used to indicate the M cells, the information used to indicate the type of the system information corresponding to each of the M cells, and the system information corresponding to each of the M cells.

When the information used to indicate a cell is a unique identifier of the cell, the information used to indicate the M cells may be a cell unique identifier list, and the cell unique identifier list includes unique identifiers of the M cells. Information used to indicate types of the system information corresponding to the M cells may be a system information type identifier list, and the system information type identifier list includes the types of the system information corresponding to the M cells. The system information corresponding to the M cells may be a system information list, and the system information list includes the system information corresponding to the M cells.

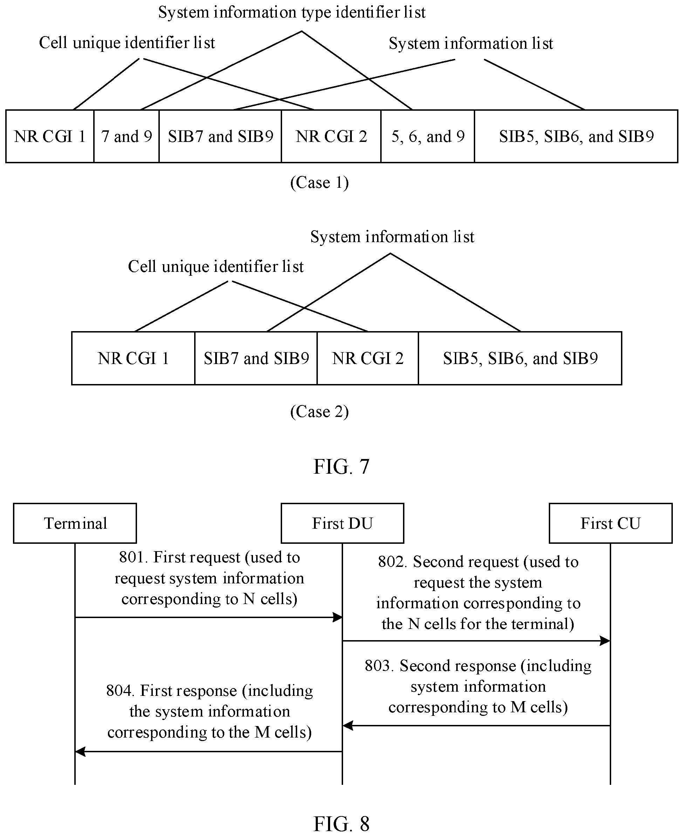

When the first response includes the information used to indicate the M cells, the information used to indicate the type of the system information corresponding to each of the M cells, and the system information corresponding to each of the M cells, the cell unique identifier list, the system information type identifier list, and the system information list may be in a format shown in case 1 in FIG. 6 or FIG. 7. When the first response includes the information used to indicate the M cells and the system information corresponding to each of the M cells, the cell unique identifier list and the system information list may be in a format shown in case 2 in FIG. 6 and FIG. 7.

In FIG. 3 to FIG. 7, an example in which a unique identifier of a cell is an NR CGI is used for description. The system information type identifier list may be represented by using multi-bit encoding, a character string, or the like. Types of system information requested by the terminal may be indicated by using a plurality of bits. In a possible implementation, a part or all of the plurality of bits are used to indicate a type of system information. For example, every three bits in the plurality of bits indicate a type of system information. Assuming that the plurality of bits are 011110, it indicates that the types of the system information requested by the terminal are a type 3 and a type 7. In another possible implementation, one of the plurality of bits is used to indicate whether a type of system information is requested, and when a value of one bit is 1 (or 0), it indicates that a type, of system information, corresponding to the bit is requested. For example, it is assumed that there are a total of 10 types of system information, and one bit is used to indicate whether one of the 10 types of the system information is requested. It is assumed that when a value of a bit is 1, it indicates that a type, of system information, corresponding to the bit is requested. If 10 bits are 1100011000, it indicates that the first, the second, the sixth, and the seventh type of system information in the 10 types of system information are requested.

Optionally, during specific implementation of step 201, the method includes: The terminal obtains the unique identifiers of the N cells and the type of the system information corresponding to each of the N cells, and sends the first request to the access network element based on the unique identifiers of the N cells and the type of the system information corresponding to each of the N cells. During specific implementation of the optional method, a terminal in idle mode may obtain a cell identity (Cell ID) of a cell and a PLMN ID based on a SIB 1, and determine a CGI of the cell based on the cell ID and the PLMN ID. A terminal in connected mode may obtain a cell ID of a cell and a PLMN ID based on a SIB1 or RRC signaling, to determine a CGI of the cell. In addition, both the terminal in idle mode and the terminal in connected mode may locally obtain the unique identifier of the cell. A manner in which the terminal obtains the unique identifier of the cell is not specifically limited in this embodiment of this application.

Before the terminal sends the first request to the access network element, the terminal may generate the cell unique identifier list based on the unique identifiers of the N cells, and generate the system information type identifier list based on the type of the system information corresponding to each of the N cells.

It should be noted that, if the M cells include N1 cells in the N cells, after step 202, the foregoing method may further include the following step.

203. The terminal sends, to another access network element, a request used to request system information corresponding to N2 cells, where the N2 cells are cells, other than the N1 cells, in the N cells, and both N1 and N2 are integers greater than 0.

Before step 203, the terminal may determine whether the M cells include the N cells. If the M cells do not include the N cells, step 203 is performed. If the terminal still does not obtain system information corresponding to all of the N cells after step 203, the terminal may further request the system information corresponding to the cells from the another access network element, until the terminal obtains the system information corresponding to all of the N cells.

It should be noted that the another access network element in step 203 may be an access network device, or may be a DU. This is not specifically limited in this embodiment of this application.

The access network device and the DU are considered as access network elements of two different types. The MAC CE signaling, the message 1, the message 3, the RRC signaling, and the like are considered as different types of signaling of the first request. Specific implementation processes of the foregoing method are slightly different when the types of access network elements are different and the types of the signaling of the first request are different. To describe this application more clearly, the following further describes the method provided in the foregoing embodiment by using Embodiment 1 to Embodiment 3. For explanations of same or related content in Embodiment 1 to Embodiment 3 and the foregoing embodiment, refer to the foregoing descriptions. Details are not described again.

### Embodiment 1

Application scenarios
(1) An access network element is a DU, a terminal is in idle mode, and a first request is a message 3 in a random access procedure.
(2) An access network element is a DU, a terminal is in connected mode, and a first request is RRC signaling.

In both the scenario (1) and the scenario (2), the DU cannot parse information included in the first request.

Referring to FIG. 8, a method provided in Embodiment 1 includes the following steps.

801. A terminal sends a first request to a DU (which is denoted as a first DU), where the first request is used to request system information corresponding to N cells. Correspondingly, the first DU receives the first request from the terminal.

For descriptions of the first request, refer to the related descriptions in the embodiment in FIG. 2. Details are not described herein again.

802. The first DU sends a second request to the first CU based on the first request, where the second request is used to request, for the terminal, the system information corresponding to the N cells. Correspondingly, the first CU receives the second request from the first DU.

The first CU may be a CU connected to the first DU. Because the first DU cannot parse information included in the first request, the first DU may directly include, in the second request, the information included in the first request, and send the second request to the first CU.

803. The first CU sends a second response to the first DU based on the second request, where the second response includes system information corresponding to M cells, and the M cells include at least a part of the N cells. Correspondingly, the first DU receives the second response from the first CU.

The second request and the second response may be F1 interface messages. For example, the second request may be initial uplink RRC information transmission (Initial UL RRC Message Transfer), and the second response may be a system information transmission command (System Information Delivery Command).

804. The first DU sends a first response to the terminal, where the first response includes the system information corresponding to the M cells. Correspondingly, the terminal receives the first response from the first DU, to obtain, based on the first response, the system information corresponding to the M cells.

For descriptions of the first response, refer to the related descriptions in the embodiment in FIG. 2. Details are not described herein again.

The first DU may directly include, in the first response, information included in the second response and send the first response to the terminal. When the terminal is in idle mode, the first DU may send the first response to the terminal in a broadcast manner. When the terminal is in connected mode, the first DU may send the first response to the terminal in a broadcast manner or by using RRC signaling.

In a conventional technology, the terminal can request system information corresponding to only one cell at a time. Compared with an existing manner of obtaining system information corresponding to a cell, in the method according to this embodiment of this application, the terminal can obtain system information corresponding to a plurality of cells at a time, thereby improving signaling exchange efficiency and reducing air interface signaling overheads.

Optionally, the second request includes: information used to indicate the N cells and information used to indicate a type of system information corresponding to each of the N cells; information used to indicate the N cells; information used to indicate a type of system information corresponding to each of the N cells; or indication information and information used to indicate a type of system information, where the indication information is used to indicate whether system information corresponding to a plurality of cells is requested.

The second response includes: information used to indicate the M cells and system information corresponding to each of the M cells; information used to indicate the M cells and information used to indicate a type of system information corresponding to each of the M cells; or information used to indicate the M cells, information used to indicate a type of system information corresponding to each of the M cells, and the system information corresponding to each of the M cells.

For formats of the information included in the second request and the second response, respectively refer to formats of the information included in the first request and the first response. When the second response includes the information used to indicate the M cells and the information used to indicate the type of the system information corresponding to each of the M cells, the format of the information included in the second response is similar to the format in FIG. 3, and details are not described herein again.

When the second response includes the information used to indicate the M cells and the information used to indicate the type of the system information corresponding to each of the M cells, the first DU may locally store system information corresponding to a plurality of cells, but the first DU cannot parse the first request sent by the terminal. In this case, the first CU only needs to notify, by using the second response, the first DU of the types of the system information corresponding to the M (or N) cells, and the first DU determines, based on the types of the system information corresponding to the M (or N) cells, the system information corresponding to the M (or N) cells, and feeds back the first response to the terminal.

Optionally, before step 803, the method further includes: The first CU locally obtains, based on the second request, system information corresponding to one or more cells. The one or more cells belong to the M cells.

Optionally, before step 803, the method further includes the following steps.

(11) The first CU sends a third request to one or more DUs based on the second request, where the third request is used to request the system information corresponding to the one or more cells. Correspondingly, the one or more DUs receive the third request from the first CU.

(12) The one or more DUs send a third response to the first CU based on the third request, where the third response includes the system information corresponding to the one or more cells. Correspondingly, the first CU receives the third response from the one or more DUs.

Information included in the third request is similar to the information included in the second request, and information included in the third response is similar to the information included in the second response. For formats of the information included in the third request and the third response, respectively refer to the formats of the information included in the second request and the second response. Details are not described again.

It should be noted that the system information that corresponds to the one or more cells and that is included in the third response may be system information corresponding to a part or all of the one or more cells requested by the third request. The system information that corresponds to the one or more cells and that is included in the third response is system information corresponding to a part or all of the M cells.

The one or more DUs may include the first DU, or may not include the first DU. The one or more DUs may be DUs connected to the first CU through an F1 interface. The third request and the third response may be F1 interface messages. For example, the third request may be an F1 setup request (F1 Setup Request) or a gNB-CU configuration update (gNB-CU Configuration Update), and the third response may be an F1 setup response (F1 Setup Response) or a gNB-CU configuration update acknowledgement (gNB-CU Configuration Update Acknowledge).

It should be noted that step (11) and step (12) may be performed after or before the first CU receives the second request from the first DU. This is not limited in this embodiment of this application.

Optionally, before step 803, the method further includes the following steps.

(21) The first CU sends a fourth request to a second CU based on the second request, where the fourth request is used to request system information corresponding to one or more cells. Correspondingly, the second CU receives the fourth request from the first CU.

(22) The second CU sends a fourth response to the first CU based on the fourth request, where the fourth response includes system information corresponding to one or more cells. Correspondingly, the first CU receives the fourth response from the second CU.

Information included in the fourth request is similar to the information included in the second request, and information included in the fourth response is similar to the information included in the second response. For formats of the information included in the fourth request and the fourth response, refer to the formats of the information included in the second request and the second response. Details are not described again.

It should be noted that the system information that corresponds to the one or more cells and that is included in the fourth response may be system information corresponding to a part or all of the one or more cells requested by the fourth request. The system information that corresponds to the one or more cells and that is included in the fourth response is system information corresponding to a part or all of the M cells.

The second CU may be a CU that has an Xn connection to the first CU. The fourth request and the fourth response may be Xn messages. For example, the fourth request may be an Xn setup request (Xn Setup Request) or a next-generation wireless network node configuration update (NG-RAN node Configuration Update), and the fourth response may be an Xn setup response (Xn Setup Response) or a next-generation wireless network node configuration update acknowledgment (NG-RAN node Configuration Update Acknowledge).

It should be noted that step (21) and step (22) may be performed after or before the first CU receives the second request from the first DU. This is not limited in this embodiment of this application.

It should be noted that step (11) and step (12) may be performed after or before step (21) and step (22). This is not limited in this embodiment of this application.

During specific implementation of step 803, in different cases, the first CU may perform different actions. The following separately describes the actions based on case 1 and case 2.

Case 1: The first DU requests the system information corresponding to the N cells, and when feeding back system information corresponding to cells to the first DU, the first CU feeds back only the system information that corresponds to the cells and that is requested by the first DU.

If the first CU has system information corresponding to a part or all of the N cells, the first CU may send the system information corresponding to the part or all of the N cells to the first DU. System information corresponding to any cell of the first CU may be generated by the first CU, or may be obtained by the first CU from another device (for example, a DU or a second CU) and stored in the first CU.

If the first CU has system information corresponding to N1 (where N1 is an integer greater than 0) cells in the N cells, the first CU may request, from a connected DU or another CU, system information corresponding to N2 cells, and sends, to the first DU, requested system information corresponding to cells and the system information corresponding to the N1 cells of the first CU. The N2 cells are cells, other than the N1 cells, in the N cells. The requested system information corresponding to the cells and the system information corresponding to the N1 cells of the first CU are the system information corresponding to the M cells, and the system information corresponding to the M cells may be sent to the first DU completely once or partially in a plurality of times. For example, the first CU first sends the obtained system information corresponding to the N1 cells to the first DU, and then sends, to the first DU, the system information that corresponds to the cells and that is requested from the connected DU or the another CU.

If the first CU does not have system information corresponding to any one of the N cells, the first CU may request, from the connected DU or the another CU, the system information corresponding to the N cells, and send requested system information corresponding to cells to the first DU. The requested system information corresponding to the cells is the system information corresponding to the M cells.

In case 1, if M is less than N, the terminal may continue to request, from the another DU, system information corresponding to a cell, other than the M cells, in the N cells until the system information corresponding to the N cells is obtained.

Case 2: The first DU requests the system information corresponding to the N cells, and the first CU feeds back not only the system information that corresponds to the cells and that is requested by the first DU, but also system information that corresponds to cells and that is not requested by the first DU.

In this case, it is assumed that system information corresponding to S cells is the system information that corresponds to the cells and that is not requested by the first DU but is sent by the first CU.

If the first CU has system information corresponding to a part or all of N+S cells, the first CU may send the system information corresponding to the part or all of the N+S cells to the first DU. The N+S cells are a sum of the N cells and the S cells.

If the first CU has system information corresponding to X1 (where X1 is an integer greater than 0) cells in the N+S cells, the first CU may request, from a connected DU or another CU, system information corresponding to X2 cells, and sends, to the first DU, requested system information corresponding to cells and the system information corresponding to the X1 cells of the first CU. The X2 cells are cells, other than the X1 cells, in the N+S cells. The requested system information corresponding to the cells and the system information corresponding to the X1 cells of the first CU are the system information corresponding to the M cells, and the system information corresponding to the M cells may be sent to the first DU completely once or partially in a plurality of times. For example, the first CU first sends the obtained system information corresponding to the X1 cells to the first DU, and then sends, to the first DU, the system information that corresponds to the cells and that is requested from the connected DU or the another CU.

If the first CU does not have system information corresponding to any one of the N+S cells, the first CU may request, from the connected DU or the another CU, system information corresponding to the N+S cells, and send requested system information corresponding to cells to the first DU. The requested system information corresponding to the cells is the system information corresponding to the M cells.

When the M cells do not include the N cells, the terminal may continue to request, from the another DU, system information corresponding to a cell, other than the received cells, in the N cells.

### Embodiment 2

### Application scenarios

(3) An access network element is a DU, a terminal is in idle mode, and a first request is MAC CE signaling or a message 1 in a random access procedure.

(4) An access network element is a DU, a terminal is in connected mode, and a first request is MAC CE signaling.

In both the scenario (3) and the scenario (4), the DU can parse information included in the first request.

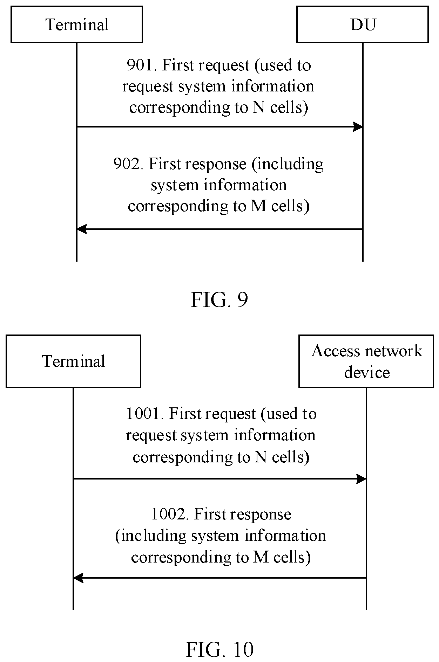

Referring to FIG. 9, a method provided in Embodiment 2 includes the following steps.

901. A terminal sends a first request to a DU, where the first request is used to request system information corresponding to N cells. Correspondingly, the DU receives the first request from the terminal.

For descriptions of the first request, refer to the related descriptions in the embodiment in FIG. 2. Details are not described herein again.

902. The DU sends a first response to the terminal based on the first request, where the first response includes system information corresponding to M cells, and the M cells include at least a part of the N cells. Correspondingly, the terminal receives the first response from the DU, to obtain, based on the first response, the system information corresponding to the M cells.

For descriptions of the first response, refer to the related descriptions in the embodiment in FIG. 2. Details are not described herein again.

When the terminal is in idle mode, the DU may send the first response to the terminal in a broadcast manner or by using a MAC CE. When the terminal is in connected mode, the DU may send the first response to the terminal in a broadcast manner or by using RRC signaling or MAC CE signaling.

In a conventional technology, the terminal can request system information corresponding to only one cell at a time. Compared with an existing manner of obtaining system information corresponding to a cell, in the method according to this embodiment of this application, the terminal can obtain system information corresponding to a plurality of cells at a time, thereby improving signaling exchange efficiency and reducing air interface signaling overheads.

Optionally, before step 902, the method may further include: The DU locally obtains, based on the first request, system information corresponding to one or more cells. The one or more cells belong to the M cells.

Optionally, before step 902, the method further includes: (11) The DU interacts with a first CU to obtain the system information corresponding to the one or more cells. The first CU may be a CU connected to the DU. The one or more cells belong to the M cells.

In specific implementation, step (11) may include the following steps.

(21) The DU sends a sixth request to the first CU based on the first request, where the sixth request is used to request the system information corresponding to the one or more cells. Correspondingly, the first CU receives the sixth request from the DU.

(22) The first CU sends a sixth response to the DU based on the sixth request, where the sixth response includes system information corresponding to one or more cells. Correspondingly, the DU receives the sixth response from the first CU.

The sixth request and the sixth response may be F1 interface messages. For example, the sixth request may be initial uplink RRC information transmission (Initial UL RRC Message Transfer), and the sixth response may be a system information transmission command (System Information Delivery Command).

Information included in the sixth request is similar to information included in a second request, and information included in the sixth response is similar to information included in a second response. For formats of the information included in the sixth request and the sixth response, respectively refer to formats of the information included in the second request and the second response. Details are not described again.

It should be noted that the system information that corresponds to the one or more cells and that is included in the sixth response may be system information corresponding to a part or all of the one or more cells requested by the sixth request. The system information that corresponds to the one or more cells and that is included in the sixth response is system information corresponding to a part or all of the M cells.

During specific implementation of step 902, in different cases, actions performed by the network elements may be different. The following separately describes the actions based on case 3 and case 4.

Case 3: The terminal requests system information corresponding to the N cells, and when feeding back system information corresponding to cells to the terminal, the DU feeds back only the system information that corresponds to the cells and that is requested by the terminal.

If the DU has system information corresponding to a part or all of the N cells, the DU may send the system information corresponding to the part or all of the N cells to the terminal. System information corresponding to any cell of the DU may be generated by the DU, or may be obtained by the DU from another device (for example, the first CU) and stored in the DU.

If the DU has system information corresponding to N1 (where N1 is an integer greater than 0) cells in the N cells, the DU may request, from the first CU, system information corresponding to N2 cells, and send, to the terminal, requested system information corresponding to cells and the system information corresponding to the N1 cells of the DU. The N2 cells are cells, other than the N1 cells, in the N cells. The requested system information corresponding to the cells and the system information corresponding to the N1 cells of the DU are the system information corresponding to the M cells, and the system information corresponding to the M cells may be sent to the terminal completely once or partially in a plurality of times. For example, the DU first sends the obtained system information corresponding to the N1 cells to the terminal, and then sends, to the terminal, the system information that corresponds to the cells and that is requested from the first CU.

If the DU does not have system information corresponding to any one of the N cells, the DU may request, from the first CU, the system information corresponding to the N cells, and send requested system information corresponding to cells to the terminal. The requested system information corresponding to the cells is the system information corresponding to the M cells.

In case 3, if M is less than N, the terminal may continue to request, from another DU, system information corresponding to a cell, other than the M cells, in the N cells until the system information corresponding to the N cells is obtained.

Case 4: The terminal requests the system information corresponding to the N cells, and the DU feeds back not only the system information that corresponds to the cells and that is requested by the terminal, but also system information that corresponds to cells and that is not requested by the terminal.

In this case, it is assumed that system information corresponding to S cells is the system information that corresponds to the cells and that is not requested by the terminal but is sent by the DU.

If the DU has system information corresponding to a part or all of N+S cells, the DU may send the system information corresponding to the part or all of the N+S cells to the terminal. The N+S cells are a sum of the N cells and the S cells.

If the DU has system information corresponding to X1 (where X1 is an integer greater than 0) cells in the N+S cells, the DU may request, from the first CU, system information corresponding to X2 cells, and send, to the terminal, requested system information corresponding to cells and the system information corresponding to the X1 cells of the DU. The X2 cells are cells, other than the X1 cells, in the N+S cells. The requested system information corresponding to the cells and the system information corresponding to the X1 cells of the DU are the system information corresponding to the M cells, and the system information corresponding to the M cells may be sent to the terminal completely once or partially in a plurality of times. For example, the DU first sends the obtained system information corresponding to the X1 cells to the terminal, and then sends, to the terminal, the system information that corresponds to the cells and that is requested from the first CU.

If the DU does not have system information corresponding to any one of the N+S cells, the DU may request, from the first CU, system information corresponding to the N+S cells, and send requested system information corresponding to cells to the terminal. The requested system information corresponding to the cells is the system information corresponding to the M cells.

When the M cells do not include the N cells, the terminal may continue to request, from the another DU, system information corresponding to a cell, other than the received cells, in the N cells.

In case 3 and case 4, after receiving the request that is sent by the DU and that is used to request the system information corresponding to the one or more cells, the first CU may feed back system information corresponding to cells to the DU in the manner in case 1 and case 2 in Embodiment 1. Details are not described herein again.

In Embodiment 1 and Embodiment 2, after obtaining the system information corresponding to the part of the N cells, the terminal further needs to request, from the another DU, system information corresponding to the other cells in the N cells, so that a delay in obtaining the system information is relatively long. To reduce the delay in obtaining the system information, the DU may add a CU identifier and/or a DU identifier in broadcast cell information. For example, the CU identifier and/or the DU identifier are/is added to a MIB or a SIB 1. The terminal determines, based on the CU identifier and/or the DU identifier, whether a plurality of cells are of a same CU or DU, to further synchronously send a request for obtaining system information corresponding to cells to one DU connected to each CU, thereby reducing the delay in obtaining the system information.

In Embodiment 1 and Embodiment 2, an example in which the provided method is applied to an NR communications system or a 5G communications network is used for description. However, it should be noted that the methods provided in Embodiment 1 and Embodiment 2 may also be applied to another network in which a base station is of a split architecture.

### Embodiment 3

Application scenario: An access network element is an access network device.

Referring to FIG. 10, a method provided in Embodiment 3 includes the following steps.

1001. A terminal sends a first request to an access network device, where the first request is used to request system information corresponding to N cells. Correspondingly, the access network device receives the first request from the terminal.

Optionally, the terminal is in idle mode, and the first request is MAC CE signaling, a message 1 in a random access procedure, or a message 3 in a random access procedure; or the terminal is in connected mode, and the first request is RRC signaling or MAC CE signaling. For related descriptions of the optional method, refer to the foregoing descriptions. Details are not described herein again.

For descriptions of the first request, refer to the related descriptions in the embodiment in FIG. 2. Details are not described herein again.

1002. The access network device sends a first response to the terminal based on the first request, where the first response includes system information corresponding to the M cells, and the M cells include at least a part of the N cells. Correspondingly, the terminal receives the first response from the access network device, to obtain, based on the first response, the system information corresponding to the M cells.

For descriptions of the first response, refer to the related descriptions in the embodiment in FIG. 2. Details are not described herein again.

When the terminal is in idle mode, the access network device may send the first response to the terminal in a broadcast manner or by using MAC CE signaling. When the terminal is in connected mode, the access network device may send the first response to the terminal in a broadcast manner or by using RRC signaling or MAC CE signaling.

In a conventional technology, the terminal can request system information corresponding to only one cell at a time. Compared with an existing manner of obtaining system information corresponding to a cell, in the method according to this embodiment of this application, the terminal can obtain system information corresponding to a plurality of cells at a time, thereby improving signaling exchange efficiency and reducing air interface signaling overheads.

Optionally, before step 1002, the method further includes: The access network device locally obtains, based on the first request, system information corresponding to one or more cells.

Optionally, before step 1002, the method further includes the following steps.

(11) The access network device sends a fifth request to another access network device based on the first request, where the fifth request is used to request the system information corresponding to the one or more cells. Correspondingly, the another access network device receives the fifth request from the access network device.

(12) The another access network device sends a fifth response to the access network device based on the fifth request, where the fifth response includes the system information corresponding to the one or more cells. Correspondingly, the access network device receives the fifth response from the another access network device.

Information included in the fifth request is similar to information included in the foregoing second request, and information included in the fifth response is similar to information included in the foregoing second response. For formats of the information included in the fifth request and the fifth response, refer to formats of the information included in the foregoing second request and the foregoing second response. Details are not described again.

During specific implementation of step 1002, in different cases, actions performed by the access network device may be different. The following separately describes the actions based on case 5 and case 6.

Case 5: The terminal requests the system information corresponding to the N cells, and when feeding back system information corresponding to cells to the terminal, the access network device feeds back only the system information that corresponds to the cells and that is requested by the terminal.

If the access network device has system information corresponding to a part or all of the N cells, the access network device may send the system information corresponding to the part or all of the N cells to the terminal. System information corresponding to any cell in the access network device may be generated by the access network device, or may be obtained by the access network device from another access network device and stored in the access network device.

If the access network device has system information corresponding to N1 (where N1 is an integer greater than 0) cells in the N cells, the access network device may request, from another access network device, system information corresponding to N2 cells, and send, to the terminal, requested system information corresponding to cells and the system information corresponding to the N1 cells of the access network device. The N2 cells are cells, other than the N1 cells, in the N cells. The requested system information corresponding to the cells and the system information corresponding to the N1 cells of the access network device are the system information corresponding to the M cells, and the system information corresponding to the M cells may be sent to the terminal completely once or partially in a plurality of times. For example, the access network device first sends the obtained system information corresponding to the N1 cells to the terminal, and then sends, to the terminal, the system information that corresponds to the cells and that is requested from the another access network device.

If the access network device does not have system information corresponding to any one of the N cells, the access network device may request, from the another access network device, the system information corresponding to the N cells, and send the requested system information corresponding to the cells to the terminal. The requested system information corresponding to the cells is the system information corresponding to the M cells.

In case 5, if M is less than N, the terminal may continue to request, from the another access network device, system information corresponding to a cell, other than the M cells, in the N cells until the system information corresponding to the N cells is obtained.

Case 6: The terminal requests the system information corresponding to the N cells, and the access network device feeds back not only the system information that corresponds to the cells and that is requested by the terminal, but also system information that corresponds to cells and that is not requested by the terminal.

In this case, it is assumed that system information corresponding to S cells is the system information that corresponds to the cells and that is not requested by the terminal but is sent by the access network device.

If the access network device has system information corresponding to a part or all of N+S cells, the access network device may send the system information corresponding to the part or all of the N+S cells to the terminal. The N+S cells are a sum of the N cells and the S cells.

If the access network device has system information corresponding to X1 (where X1 is an integer greater than 0) cells in the N+S cells, the access network device may request, from the another access network device, system information corresponding to X2 cells, and send, to the terminal, requested system information corresponding to cells and the system information corresponding to the X1 cells of the access network device. The X2 cells are cells, other than the X1 cells, in the N+S cells. The requested system information corresponding to the cells and the system information corresponding to the X1 cells of the access network device are the system information corresponding to the M cells, and the system information corresponding to the M cells may be sent to the terminal completely once or partially in a plurality of times. For example, the access network device first sends the obtained system information corresponding to the X1 cells to the terminal, and then sends, to the terminal, the system information that corresponds to the cells and that is requested from the another access network device.

If the access network device does not have system information corresponding to any one of the N+S cells, the access network device may request, from the another access network device, system information corresponding to the N+S cells, and send requested system information corresponding to cells to the terminal. The requested system information corresponding to the cells is the system information corresponding to the M cells.

When the M cells do not include the N cells, the terminal may continue to request, from the another access network device, system information corresponding to a cell, other than the received cells, in the N cells.

To make an implementation procedure of the foregoing embodiment clearer, the following describes the implementation procedure of the method provided in the foregoing embodiment by using Embodiment 1 to Embodiment 4 as an example.

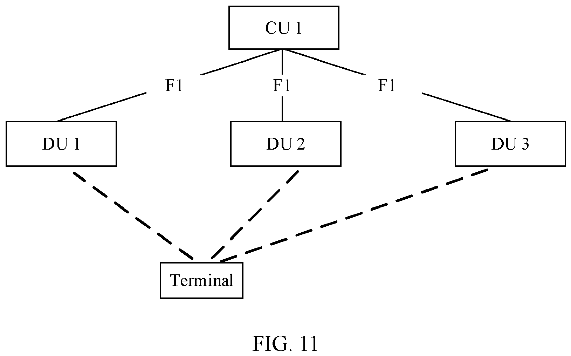

Based on the architecture shown in FIG. 11, Embodiment 1 and Embodiment 2 provide an example description of the implementation procedure of the method provided in the foregoing embodiment. In FIG. 11, a CU 1 is connected to three DUs: a DU 1, a DU 2, and a DU 3. For cells separately covered by the three DUs, refer to Table 2.

**Table 2**

| DU 1 | DU 2 | DU 3 |
|---|---|---|
| Cell 1, cell 2, and cell 3 | Cell 4 | Cell 5 and cell 6 |

### Embodiment 1 (ADU cannot parse information included in a first request)

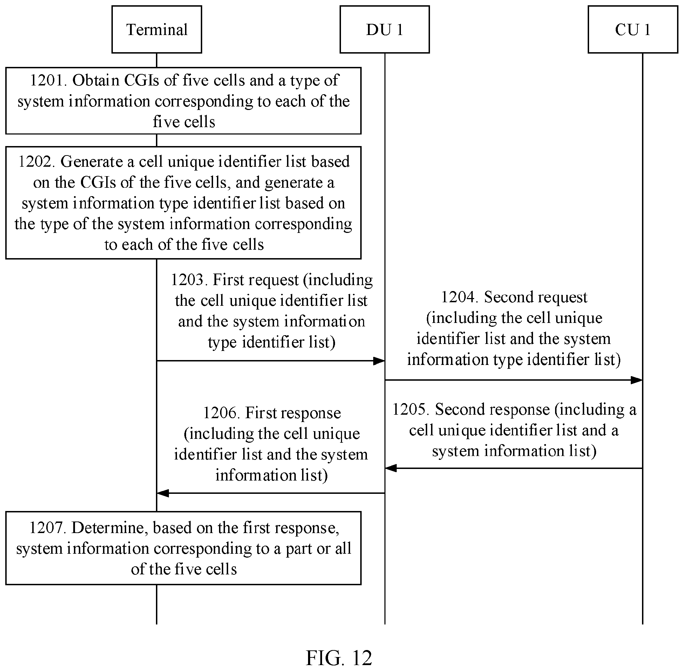

It is assumed that a terminal needs to obtain system information corresponding to the cell 1 to the cell 5. Referring to FIG. 12, a method provided in Embodiment 1 includes the following steps.

1201. The terminal obtains CGIs of the five cells and a type of system information corresponding to each of the five cells.

The five cells are the cell 1 to the cell 5.

1202. The terminal generates a cell unique identifier list based on the CGIs of the five cells, and generates a system information type identifier list based on a type of system information corresponding to each of the five cells.

The cell unique identifier list includes the CGIs of the five cells. The system information type identifier list includes a type of system information corresponding to each of the five cells.

1203. The terminal sends the first request to the DU 1 based on the cell unique identifier list and the system information type identifier list. Correspondingly, the DU 1 receives the first request from the terminal.

The first request includes the cell unique identifier list and the system information type identifier list.

In Embodiment 1, the DU cannot parse the information included in the first request. When the terminal is in idle mode, the first request may be a message 3 in a random access procedure. When the terminal is in connected mode, the first request may be RRC signaling.

It should be noted that, during specific implementation of step 1203, the terminal may send the first request to any one of the DU 1, the DU 2, and the DU 3. In Embodiment 1, an example in which the terminal sends the first request to the DU 1 is used for description.

1204. The DU 1 sends a second request to the CU 1 based on the first request. Correspondingly, the CU 1 receives the second request from the DU 1.

During specific implementation of step 1204, because the DU cannot parse the information included in the first request, the DU 1 may directly include, in the second request, the information included in the first request, and send the second request to the CU 1. The second request includes a cell unique identifier list and a system information type identifier list.

1205. The CU 1 sends a second response to the DU 1 based on the second request. Correspondingly, the DU 1 receives the second response from the CU 1.

The second response includes a cell unique identifier list and a system information list, and the system information list includes system information corresponding to a part or all of the five cells.

1206. The DU 1 sends the first response to the terminal based on the second response. Correspondingly, the terminal receives the first response from the DU 1.

The first response includes the cell unique identifier list and the system information list, and the system information list includes the system information corresponding to the part or all of the five cells.

1207. The terminal determines, based on the first response, the system information corresponding to the part or all of the five cells.

After step 1207, the terminal may determine whether system information corresponding to all of the five cells is obtained. If the system information corresponding to all of the five cells is obtained, the process ends. If the system information corresponding to all of the five cells is not obtained, the terminal may send, to a DU other than the DU 1, a request used to request system information corresponding to another cell (that is, a cell that is not obtained) in the five cells. For example, if the terminal obtains, by using the first request, the system information corresponding to the cell 1 to the cell 3 in the five cells, the terminal may further send, to the DU 2, a request used to request the system information corresponding to the cell 4 and the cell 5, until the system information corresponding to the five cells is obtained.

### Embodiment 2 (ADU can parse information included in a first request)

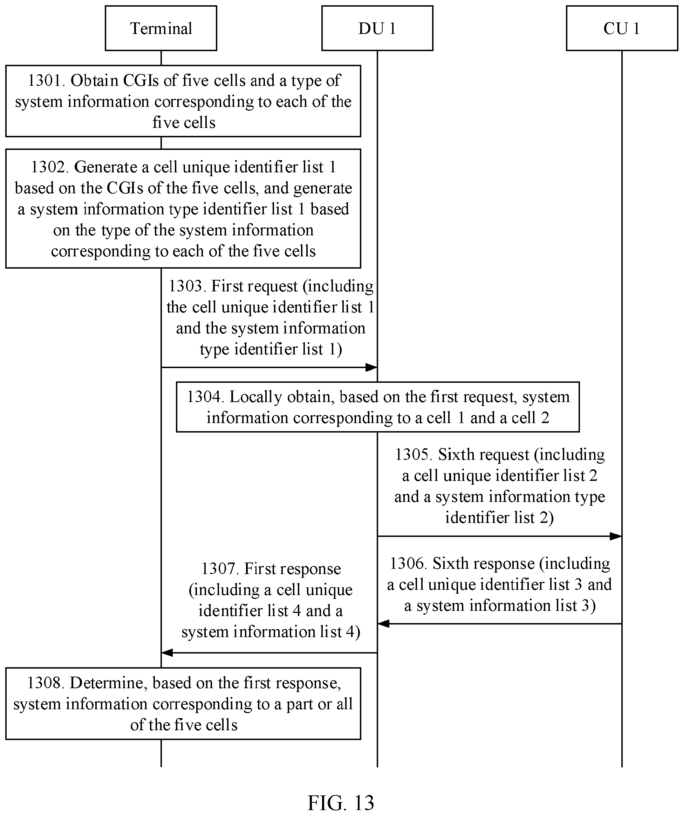

It is assumed that the terminal needs to obtain system information corresponding to the cell 1 to the cell 5, and the DU 1 stores the system information corresponding to the cell 1 and the cell 2. Referring to FIG. 13, a method provided in Embodiment 2 includes the following steps.

1301. The terminal obtains CGIs of the five cells and a type of system information corresponding to each of the five cells.

The five cells are the cell 1 to the cell 5.

1302. The terminal generates a cell unique identifier list 1 based on the CGIs of the five cells, and generates a system information type identifier list 1 based on a type of system information corresponding to each of the five cells.

The cell unique identifier list 1 includes the CGIs of five cells. The system information type identifier list 1 includes the type of the system information corresponding to each of the five cells.

1303. The terminal sends the first request to the DU 1 based on the cell unique identifier list 1 and the system information type identifier list 1. Correspondingly, the DU 1 receives the first request from the terminal.

The first request is used to request the system information corresponding to the cell 1 to the cell 5, and the first request includes the cell unique identifier list 1 and the system information type identifier list 1.

In Embodiment 2, the DU can parse the information included in the first request. When the terminal is in idle mode, the first request is MAC CE signaling or a message 1 in a random access procedure. When the terminal is in connected mode, the first request is MAC CE signaling.

It should be noted that, during specific implementation of step 1303, the terminal may send the first request to any one of the DU 1, the DU 2, and the DU 3. In Embodiment 2, an example in which the terminal sends the first request to the DU 1 is used for description.

1304. The DU 1 locally obtains, based on the first request, the system information corresponding to the cell 1 and the cell 2.

1305. The DU 1 sends a sixth request to the CU 1 based on the first request. Correspondingly, the CU 1 receives the sixth request from the DU 1.

The sixth request is used to request the system information corresponding to the cell 3 to the cell 5. The sixth request includes a cell unique identifier list 2 and a system information type identifier list 2. The cell unique identifier list 2 includes identifiers of the cell 3 to the cell 5, and the system information type identifier list 2 includes type identifiers of the system information corresponding to the cell 3 to the cell 5.

1306. The CU 1 sends a sixth response to the DU 1 based on the sixth request. Correspondingly, the DU 1 receives the sixth response from the CU 1.

The sixth response includes a cell unique identifier list 3 and a system information list 3. The cell unique identifier list 3 includes identifiers of a part or all of the cell 3 to the cell 5. The system information list 3 includes system information corresponding to a part or all of the cell 3 to the cell 5.

1307. The DU 1 sends a first response to the terminal based on the sixth response and the locally obtained system information corresponding to the cell 1 and the cell 2. Correspondingly, the terminal receives the first response from the DU 1.

The first response includes a cell unique identifier list 4 and a system information list 4. The cell unique identifier list 4 includes identifiers of the cell 1 and the cell 2, and further includes an identifier of a cell corresponding to system information obtained by the DU 1 from the CU 1. The system information list 4 includes the system information corresponding to the cell 1 and the cell 2, and further includes system information that corresponds to a cell and that is obtained by the DU 1 from the CU 1.

1308. The terminal determines, based on the first response, system information corresponding to a part or all of the five cells.

After step 1308, the terminal may determine whether system information corresponding to all of the five cells is obtained. If the system information corresponding to all of the five cells is obtained, the process ends. If the system information corresponding to all of the five cells is not obtained, the terminal may send, to a DU other than the DU 1, a request used to request system information corresponding to another cell (that is, a cell that is not obtained) in the five cells. For example, if the terminal obtains, by using the first request, the system information corresponding to the cell 1 to the cell 3 in the five cells, the terminal may further send, to the DU 2, a request used to request the system information corresponding to the cell 4 and the cell 5, until the system information corresponding to the five cells is obtained.

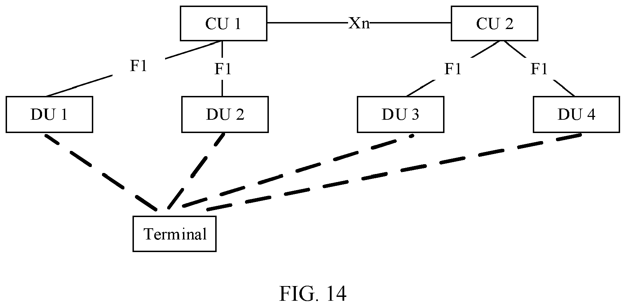

Based on the architecture shown in FIG. 14, Embodiment 3 and Embodiment 4 provide an example description of the implementation procedure of the method provided in the foregoing embodiment. In FIG. 14, a CU 1 is connected to a DU 1 and a DU 2, and a CU 2 is connected to a DU 3 and a DU 4. For cells separately covered by the four DUs, refer to Table 3.

**Table 3**

| DU 1 | DU 2 | DU 3 | DU 4 |
|---|---|---|---|
| Cell 1 and cell 2 | Cell 3 | Cell 4 and cell 5 | Cell 6 and cell 7 |

### Embodiment 3 (ADU cannot parse information included in a first request)

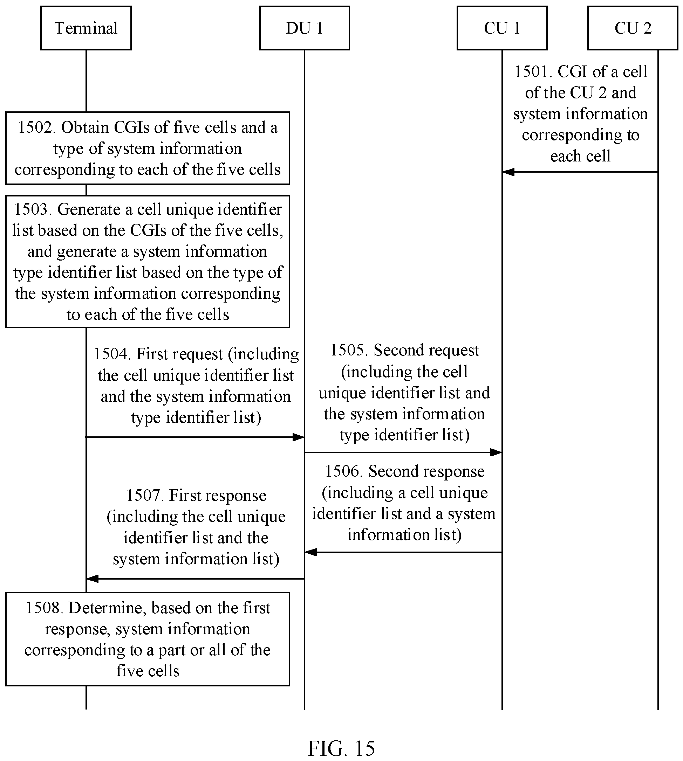

Referring to FIG. 15, it is assumed that a terminal needs to obtain system information corresponding to the cell 1 to the cell 5. The method provided in Embodiment 3 includes the following step 1501 to step 1508.

1501. The CU 1 obtains, by using an Xn interface, a CGI of a cell of the CU 2 and system information corresponding to each cell.

After step 1501, the CU 1 may locally store the obtained CGI of the cell of the CU 2 and the obtained system information corresponding to each cell. Similarly, the CU 2 may also obtain, by using an Xn interface, a CGI of a cell of the CU 1 and system information corresponding to each cell, and locally store the CGI and the system information.

1502-1508. Step 1502 to step 1508 are respectively the same as step 1201 to step 1207. In Embodiment 3, the terminal may send the first request to any DU of the DU 1, the DU 2, the DU 3, and the DU 4. In Embodiment 3, an example in which the terminal sends the first request to the DU 1 is used for description.

### Embodiment 4 (A DU can parse information included in a first request)

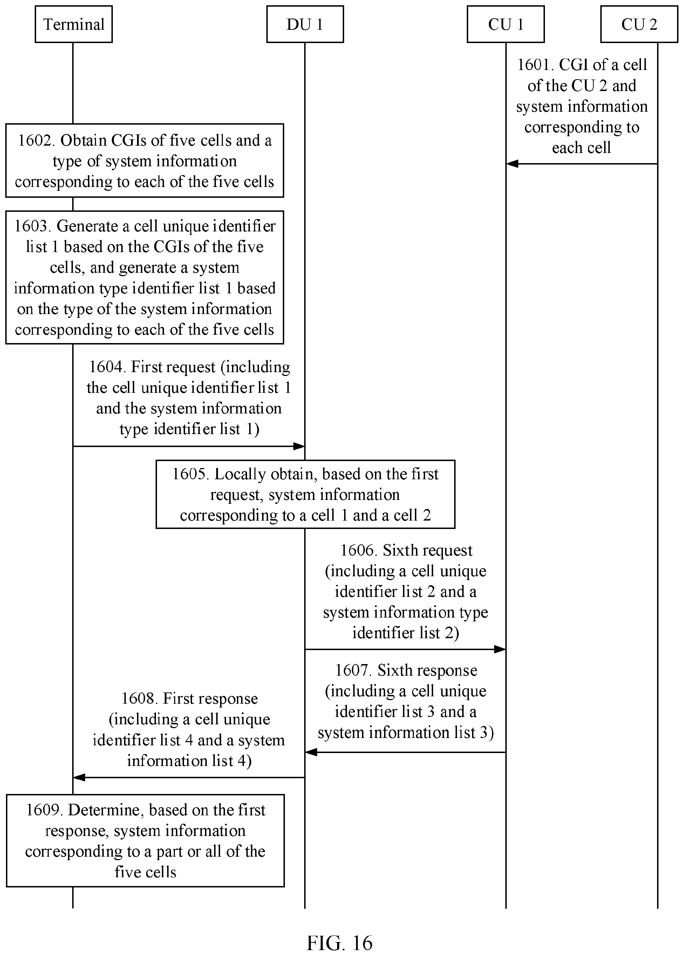

It is assumed that the terminal needs to obtain system information corresponding to the cell 1 to the cell 5, and the DU 1 stores the system information corresponding to the cell 1 and the cell 2. Referring to FIG. 16, the method provided in Embodiment 4 includes step 1601 to step 1609. Step 1601 is the same as step 1501, and step 1602 to step 1609 are respectively the same as step 1301 to step 1308. In Embodiment 4, the terminal may send the first request to any DU of the DU 1, the DU 2, the DU 3, and the DU 4. In Embodiment 4, an example in which the terminal sends the first request to the DU 1 is used for description.

In Embodiment 3 and Embodiment 4, it should be noted that the CU 1 and the CU 2 may not obtain, in advance, system information corresponding to cells of each other, but obtain, through interaction, the system information corresponding to the cells when the terminal sends a request. This is not specifically limited in this embodiment of this application.

The foregoing mainly describes the solutions in the embodiments of this application from a perspective of interaction between network elements. It may be understood that, to implement the foregoing functions, the network elements such as the DU, the CU, the access network device and the terminal include corresponding hardware structures and/or software modules for performing the functions. A person skilled in the art should be easily aware that, in combination with the examples of units and algorithm steps described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions of each particular application, but it should not be considered that the implementation goes beyond the scope of this application.

In the embodiments of this application, function unit division may be performed on the DU, the CU, the access network device, and the terminal based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that, in the embodiments of this application, division into units is an example, and is merely logical function division. In actual implementation, another division manner may be used.

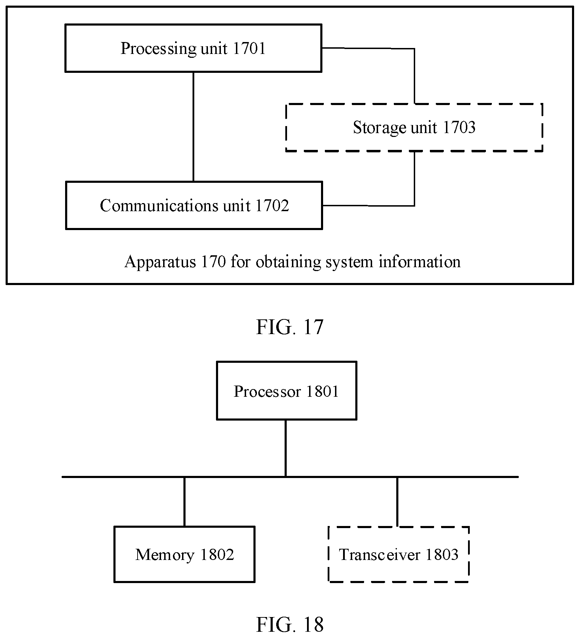

When an integrated unit is used, FIG. 17 is a possible schematic structural diagram of an apparatus (denoted as an apparatus 170 for obtaining system information) for obtaining system information in the foregoing embodiments. The apparatus 170 for obtaining system information includes a processing unit 1701 and a communications unit 1702, and may further include a storage unit 1703. The schematic structural diagram shown in FIG. 17 may be used to represent a structure of the terminal, the DU, the CU, or the access network device in the foregoing embodiments.

When the schematic structural diagram shown in FIG. 17 is used to show the structure of the terminal in the foregoing embodiments, the processing unit 1701 is configured to control and manage an action of the terminal. For example, the processing unit 1701 is configured to support the terminal in performing 201 and 202 in FIG. 2, 801 and 802 in FIG. 8, 901 and 902 in FIG. 9, 1001 and 1002 in FIG. 10, 1201, 1202, 1203, 1206, and 1207 in FIG. 12, 1301, 1302, 1303, 1307, and 1308 in FIG. 13, 1502, 1503, 1504, 1507, and 1508 in FIG. 15, 1602, 1603, 1604, 1608, and 1609 in FIG. 16, and/or an action performed by the terminal in another process described in the embodiments of this application. The processing unit 1701 may communicate with another network entity through the communications unit 1702, for example, communicate with the access network element shown in FIG. 2. The storage unit 1703 is configured to store program code and data that are of the terminal.

When the schematic structural diagram shown in FIG. 17 is used to show the structure of the terminal in the foregoing embodiments, the apparatus 170 for obtaining system information may be a terminal, or may be a chip in a terminal.

When the schematic structural diagram shown in FIG. 17 is used to show the structure of the DU in the foregoing embodiments, the processing unit 1701 is configured to control and manage an action of the DU. For example, the processing unit 1701 is configured to support the DU in performing 201 and 202 in FIG. 2 (in this case, the access network element in FIG. 2 is the DU), 801 to 804 in FIG. 8 (in this case, the DU is the first DU in FIG. 8), 901 and 902 in FIG. 9, 1203 to 1206 in FIG. 12 (in this case, the DU is the DU 1 in FIG. 12), 1303 to 1307 in FIG. 13 (in this case, the DU is the DU 1 in FIG. 13), 1504 to 1507 in FIG. 15 (in this case, the DU is the DU 1 in FIG. 15), 1604 to 1608 in FIG. 16 (in this case, the DU is the DU 1 in FIG. 16), and/or an action performed by the DU in another process described in the embodiments of this application. The processing unit 1701 may communicate with another network entity through the communications unit 1702, for example, communicate with the terminal shown in FIG. 8. The storage unit 1703 is configured to store program code and data that are of the DU.

When the schematic structural diagram shown in FIG. 17 is used to show the structure of the DU in the foregoing embodiments, the apparatus 170 for obtaining system information may be a DU, or may be a chip in a DU.

When the schematic structural diagram shown in FIG. 17 is used to show the structure of the CU in the foregoing embodiments, the processing unit 1701 is configured to control and manage an action of the CU. For example, the processing unit 1701 is configured to support the CU in performing 802 and 803 in FIG. 8 (in this case, the CU is the first CU in FIG. 8), 1204 and 1205 in FIG. 12 (in this case, the CU is the CU 1 in FIG. 12), 1305 and 1306 in FIG. 13 (in this case, the CU is the CU 1 in FIG. 13), 1501 in FIG. 15 (in this case, the CU is the CU 1 or the CU 2 in FIG. 15), 1505 and 1506 in FIG. 15 (in this case, the CU is the CU 1 in FIG. 15), 1601 in FIG. 16 (in this case, the CU is the CU 1 or the CU 2 in FIG. 16), 1606 and 1607 in FIG. 16 (in this case, the CU is the CU 1 in FIG. 16), and/or an action performed by the CU in another process described in the embodiments of this application. The processing unit 1701 may communicate with another network entity through the communications unit 1702, for example, communicate with the first DU shown in FIG. 8. The storage unit 1703 is configured to store program code and data that are of the CU.

When the schematic structural diagram shown in FIG. 17 is used to show the structure of the CU in the foregoing embodiments, the apparatus 170 for obtaining system information may be a CU, or may be a chip in a CU.

When the schematic structural diagram shown in FIG. 17 is used to show the structure of the access network device in the foregoing embodiments, the processing unit 1701 is configured to control and manage an action of the access network device. For example, the processing unit 1701 is configured to support the access network device in performing 201 and 202 in FIG. 2 (in this case, the access network element in FIG. 2 is an access network device), 1001 and 1002 in FIG. 10, and/or an action performed by the access network device in another process described in the embodiments of this application. The processing unit 1701 may communicate with another network entity through the communications unit 1702, for example, communicate with the terminal shown in FIG. 10. The storage unit 1703 is configured to store program code and data that are of the access network device.

When the schematic structural diagram shown in FIG. 17 is used to show the structure of the access network device in the foregoing embodiments, the apparatus 170 for obtaining system information may be an access network device, or may be a chip in an access network device.

When the apparatus 170 for obtaining system information is the terminal, the DU, the CU, or the access network device, the processing unit 1701 may be a processor or a controller, and the communications unit 1702 may be a communications interface, a transceiver, a transceiver, a transceiver circuit, a transceiver apparatus, or the like. The communications interface is a collective term, and may include one or more interfaces. The storage unit 1703 may be a memory. When the apparatus 170 for obtaining system information is a chip in a terminal, a DU, a CU, or an access network device, the processing unit 1701 may be a processor or a controller, and the communications unit 1702 may be an input interface and/or an output interface, a pin, a circuit, or the like. The storage unit 1703 may be a storage unit (for example, a register or a cache) in the chip, or may be a storage unit (for example, a read-only memory or a random access memory) that is in the terminal, the DU, the CU, or the access network device and that is located outside the chip.

The communications unit may also be referred to as a transceiver unit. An antenna and a control circuit that have receiving and sending functions and that is in the apparatus 170 for obtaining system information may be considered as the communications unit 1702 of the apparatus 170 for obtaining system information, and a processor that has a processing function may be considered as a processing unit 1701 of the apparatus 170 for obtaining system information. Optionally, a component that is configured to implement a receiving function and that is in the communications unit 1702 may be considered as a receiving unit. The receiving unit is configured to perform a receiving step in the embodiments of this application. The receiving unit may be a receiver, a receiver, a receiver circuit, or the like. A component that is configured to implement a sending function and that is in the communications unit 1702 may be considered as a sending unit. The sending unit is configured to perform a sending step in the embodiments of this application. The sending unit may be a transmitter, a transmitter, a sending circuit, or the like.

When an integrated unit in FIG. 17 is implemented in a form of a software function module and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods in the embodiments of this application. The storage medium that stores the computer software product includes any medium that can store program code, for example, a USB flash drive, a removable hard disk, a read-only memory (read-only memory, ROM for short), a random access memory (random access memory, RAM for short), a magnetic disk, or an optical disc.

The unit in FIG. 17 may alternatively be referred to as a module. For example, the processing unit may be referred to as a processing module.

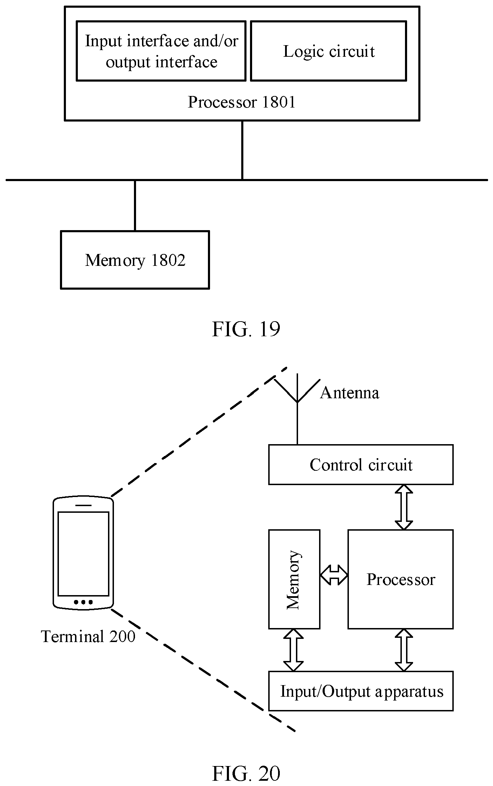

An embodiment of this application further provides a schematic structural diagram of hardware of an apparatus (denoted as an apparatus 180 for obtaining system information) for obtaining system information. Referring to FIG. 18 or FIG. 19, the apparatus 180 for obtaining system information includes a processor 1801. Optionally, the apparatus further includes a memory 1802 connected to the processor 1801.

The processor 1801 may be a general-purpose central processing unit (central processing unit, CPU for short), a microprocessor, an application-specific integrated circuit (application-specific integrated circuit, ASIC for short), or one or more integrated circuits configured to control program execution in the solutions in this application. The processor 1801 may alternatively include a plurality of CPUs, and the processor 1801 may be a single-core (single-CPU) processor or a multi-core (multi-CPU) processor. The processor herein may refer to one or more devices, circuits, and/or processing cores configured to process data (for example, computer program instructions).

The memory 1802 may be a ROM or another type of static storage device that can store static information and instructions, or a RAM or another type of dynamic storage device that can store information and instructions, or may be an electrically erasable programmable read-only memory (electrically erasable programmable read-only memory, EEPROM for short), a compact disc read-only memory (compact disc read-only memory, CD-ROM for short) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. This is not limited in the embodiments of this application. The memory 1802 may exist independently, or may be integrated into the processor 1801. The memory 1802 may include computer program code. The processor 1801 is configured to execute the computer program code stored in the memory 1802, to implement the method provided in the embodiments of this application.

In a first possible implementation, referring to FIG. 18, the apparatus 180 for obtaining system information further includes a transceiver 1803. The processor 1801, the memory 1802, and the transceiver 1803 are connected through a bus. The transceiver 1803 is configured to communicate with another device or a communications network. Optionally, the transceiver 1803 may include a transmitter and a receiver. A component configured to implement a receiving function in the transceiver 1803 may be considered as a receiver. The receiver is configured to perform a receiving step in the embodiments of this application. A component configured to implement a sending function in the transceiver 1803 may be considered as a transmitter. The transmitter is configured to perform a sending step in the embodiments of this application.

Based on the first possible implementation, the schematic structural diagram shown in FIG. 18 may be used to show a structure of the DU, the CU, the access network device, or the terminal in the foregoing embodiments.

When the schematic structural diagram shown in FIG. 18 is used to show the structure of the terminal in the foregoing embodiments, the processor 1801 is configured to control and manage an action of the terminal. For example, the processor 1801 is configured to support the terminal in performing 201 and 202 in FIG. 2, 801 and 802 in FIG. 8, 901 and 902 in FIG. 9, 1001 and 1002 in FIG. 10, 1201, 1202, 1203, 1206, and 1207 in FIG. 12, 1301, 1302, 1303, 1307, and 1308 in FIG. 13, 1502, 1503, 1504, 1507, and 1508 in FIG. 15, 1602, 1603, 1604, 1608, and 1609 in FIG. 16, and/or an action performed by the terminal in another process described in the embodiments of this application. The processor 1801 may communicate with another network entity through the transceiver 1803, for example, communicate with the access network element shown in FIG. 2. The memory 1802 is configured to store program code and data that are of the terminal.

When the schematic structural diagram shown in FIG. 18 is used to show the structure of the DU in the foregoing embodiments, the processor 1801 is configured to control and manage an action of the DU. For example, the processor 1801 is configured to support the DU in performing 201 and 202 in FIG. 2 (in this case, the access network element in FIG. 2 is the DU), 801 to 804 in FIG. 8 (in this case, the DU is the first DU in FIG. 8), 901 and 902 in FIG. 9, 1203 to 1206 in FIG. 12 (in this case, the DU is the DU 1 in FIG. 12), 1303 to 1307 in FIG. 13 (in this case, the DU is the DU 1 in FIG. 13), 1504 to 1507 in FIG. 15 (in this case, the DU is the DU 1 in FIG. 15), 1604 to 1608 in FIG. 16 (in this case, the DU is the DU 1 in FIG. 16), and/or an action performed by the DU in another process described in the embodiments of this application. The processor 1801 may communicate with another network entity through the transceiver 1803, for example, communicate with the terminal shown in FIG. 8. The memory 1802 is configured to store program code and data that are of the DU.

When the schematic structural diagram shown in FIG. 18 is used to show the structure of the CU in the foregoing embodiments, the processor 1801 is configured to control and manage an action of the CU. For example, the processor 1801 is configured to support the CU in performing 802 and 803 in FIG. 8 (in this case, the CU is the first CU in FIG. 8), 1204 and 1205 in FIG. 12 (in this case, the CU is the CU 1 in FIG. 12), 1305 and 1306 in FIG. 13 (in this case, the CU is the CU 1 in FIG. 13), 1501 in FIG. 15 (in this case, the CU is the CU 1 or the CU 2 in FIG. 15), 1505 and 1506 in FIG. 15 (in this case, the CU is the CU 1 in FIG. 15), 1601 in FIG. 16 (in this case, the CU is the CU 1 or the CU 2 in FIG. 16), 1606 and 1607 in FIG. 16 (in this case, the CU is the CU 1 in FIG. 16), and/or an action performed by the CU in another process described in the embodiments of this application. The processor 1801 may communicate with another network entity through the transceiver 1803, for example, communicate with the first DU shown in FIG. 8. The memory 1802 is configured to store program code and data that are of the CU.

When the schematic structural diagram shown in FIG. 18 is used to show the structure of the access network device in the foregoing embodiments, the processor 1801 is configured to control and manage an action of the access network device. For example, the processor 1801 is configured to support the access network device in performing 201 and 202 in FIG. 2 (in this case, the access network element in FIG. 2 is an access network device), 1001 and 1002 in FIG. 10, and/or an action performed by the access network device in another process described in the embodiments of this application. The processor 1801 may communicate with another network entity through the transceiver 1803, for example, communicate with the terminal shown in FIG. 10. The memory 1802 is configured to store program code and data that are of the access network device.

In a second possible implementation, the processor 1801 includes a logic circuit and an input interface and/or an output interface. The output interface is configured to perform a sending action in a corresponding method, and the input interface is configured to perform a receiving action in a corresponding method.

Based on the second possible implementation, referring to FIG. 19, the schematic structural diagram shown in FIG. 19 may be used to show a structure of a DU, a CU, an access network device, or a terminal in the foregoing embodiments.

When the schematic structural diagram shown in FIG. 19 is used to show the structure of the terminal in the foregoing embodiments, the processor 1801 is configured to control and manage an action of the terminal. For example, the processor 1801 is configured to support the terminal in performing 201 and 202 in FIG. 2, 801 and 802 in FIG. 8, 901 and 902 in FIG. 9, 1001 and 1002 in FIG. 10, 1201, 1202, 1203, 1206, and 1207 in FIG. 12, 1301, 1302, 1303, 1307, and 1308 in FIG. 13, 1502, 1503, 1504, 1507, and 1508 in FIG. 15, 1602, 1603, 1604, 1608, and 1609 in FIG. 16, and/or an action performed by the terminal in another process described in the embodiments of this application. The processor 1801 may communicate with another network entity by using the input interface and/or the output interface, for example, communicate with the access network element shown in FIG. 2. The memory 1802 is configured to store program code and data that are of the terminal.

When the schematic structural diagram shown in FIG. 19 is used to show the structure of the DU in the foregoing embodiments, the processor 1801 is configured to control and manage an action of the DU. For example, the processor 1801 is configured to support the DU in performing 201 and 202 in FIG. 2 (in this case, the access network element in FIG. 2 is the DU), 801 to 804 in FIG. 8 (in this case, the DU is the first DU in FIG. 8), 901 and 902 in FIG. 9, 1203 to 1206 in FIG. 12 (in this case, the DU is the DU 1 in FIG. 12), 1303 to 1307 in FIG. 13 (in this case, the DU is the DU 1 in FIG. 13), 1504 to 1507 in FIG. 15 (in this case, the DU is the DU 1 in FIG. 15), 1604 to 1608 in FIG. 16 (in this case, the DU is the DU 1 in FIG. 16), and/or an action performed by the DU in another process described in the embodiments of this application. The processor 1801 may communicate with another network entity by using an input interface and/or an output interface, for example, communicate with the terminal shown in FIG. 8. The memory 1802 is configured to store program code and data that are of the DU.

When the schematic structural diagram shown in FIG. 19 is used to show the structure of the CU in the foregoing embodiments, the processor 1801 is configured to control and manage an action of the CU. For example, the processor 1801 is configured to support the CU in performing 802 and 803 in FIG. 8 (in this case, the CU is the first CU in FIG. 8), 1204 and 1205 in FIG. 12 (in this case, the CU is the CU 1 in FIG. 12), 1305 and 1306 in FIG. 13 (in this case, the CU is the CU 1 in FIG. 13), 1501 in FIG. 15 (in this case, the CU is the CU 1 or the CU 2 in FIG. 15), 1505 and 1506 in FIG. 15 (in this case, the CU is the CU 1 in FIG. 15), 1601 in FIG. 16 (in this case, the CU is the CU 1 or the CU 2 in FIG. 16), 1606 and 1607 in FIG. 16 (in this case, the CU is the CU 1 in FIG. 16), and/or an action performed by the CU in another process described in the embodiments of this application. The processor 1801 may communicate with another network entity by using an input interface and/or an output interface, for example, communicate with the first DU shown in FIG. 8. The memory 1802 is configured to store program code and data that are of the CU.

When the schematic structural diagram shown in FIG. 19 is used to show the structure of the access network device in the foregoing embodiments, the processor 1801 is configured to control and manage an action of the access network device. For example, the processor 1801 is configured to support the access network device in performing 201 and 202 in FIG. 2 (in this case, the access network element in FIG. 2 is an access network device), 1001 and 1002 in FIG. 10, and/or an action performed by the access network device in another process described in the embodiments of this application. The processor 1801 may communicate with another network entity by using an input interface and/or an output interface, for example, communicate with the terminal shown in FIG. 10. The memory 1802 is configured to store program code and data that are of the access network device.

In addition, an embodiment of this application further provides a schematic structural diagram of hardware of a terminal (denoted as a terminal 200). For details, refer to FIG. 20.

FIG. 20 is a schematic structural diagram of hardware of the terminal 200. For ease of description, FIG. 20 shows only main components of the terminal. As shown in FIG. 20, a terminal 200 includes a processor, a memory, a control circuit, an antenna, and an input/output apparatus.

The processor is mainly configured to: process a communications protocol and communications data, control the entire terminal, execute a software program, and process data of the software program. For example, the processor is configured to control the terminal to perform 201 and 202 in FIG. 2, 801 and 802 in FIG. 8, 901 and 902 in FIG. 9, 1001 and 1002 in FIG. 10, 1201, 1202, 1203, 1206, and 1207 in FIG. 12, 1301, 1302, 1303, 1307, and 1308 in FIG. 13, 1502, 1503, 1504, 1507, and 1508 in FIG. 15, 1602, 1603, 1604, 1608, and 1609 in FIG. 16, and/or an action performed by the terminal in another process described in the embodiments of this application. The memory is mainly configured to store the software program and the data. The control circuit (which may also be referred to as a radio frequency circuit) is mainly configured to: perform conversion between a baseband signal and a radio frequency signal, and process the radio frequency signal. A combination of the control circuit and the antenna may also be referred to as a transceiver that is mainly configured to send/receive a radio frequency signal in an electromagnetic wave form. The input/output apparatus, such as a touchscreen, a display screen, or a keyboard, is mainly configured to: receive data entered by a user, and output data to the user.

After the terminal is powered on, the processor can read the software program in the memory, interpret and execute instructions of the software program, and process the data of the software program. When the processor needs to send data through the antenna, after performing baseband processing on to-be-sent data, the processor outputs a baseband signal to the control circuit in the control circuit; and the control circuit performs radio frequency processing on the baseband signal and then sends the radio frequency signal to the outside in a form of an electromagnetic wave through the antenna. When data is sent to the terminal, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 20 shows only one memory and only one processor. An actual terminal may include a plurality of processors and a plurality of memories. The memory may also be referred to as a storage medium, a storage device, or the like. This is not limited in the embodiments of this application.

In an optional implementation, the processor may include a baseband processor and a central processing unit. The baseband processor is mainly configured to process the communications protocol and the communications data, and the central processing unit is mainly configured to: control the entire terminal, execute the software program, and process the data of the software program. The processor in FIG. 20 is integrated with functions of the baseband processor and the central processing unit. A person skilled in the art may understand that, the baseband processor and the central processing unit may be independent processors, and are interconnected through a technology such as a bus. A person skilled in the art may understand that the terminal may include a plurality of baseband processors to adapt to different network standards, and the terminal may include a plurality of central processing units to enhance a processing capability of the terminal. The components in the terminal may be connected by using various buses. The baseband processor may also be referred to as a baseband processing circuit or a baseband processing chip. The central processing unit may also be referred to as a central processing circuit or a central processing chip. A function of processing the communications protocol and the communication data may be built in the processor, or may be stored in the memory in a form of a software program. The processor executes the software program to implement a baseband processing function.

An embodiment of this application further provides a computer-readable storage medium, including instructions. When the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communications system, including the foregoing network device and the foregoing terminal.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedures or the functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD for short)), or the like.

Although this application is described with reference to the embodiments, in a process of implementing this application that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A method for obtaining system information, comprising:
sending (201), by a terminal, a first request to an access network element, wherein the first request is used to request system information corresponding to N cells, and N is an integer greater than 1, wherein the N cells are covered by at least one distributed unit each connected to least one centralized unit, wherein the system information comprises on-demand system information that has not been received by the terminal; and
receiving (202), by the terminal, a first response from the access network element, wherein the first response comprises the on-demand system information corresponding to M cells, the M cells comprise at least a part of the N cells, and M is an integer greater than 0.

2. The method according to claim 1, wherein the first request comprises information used to indicate the N cells and information used to indicate a type of system information corresponding to each of the N cells, or the first request comprises information used to indicate the N cells.

3. The method according to claim 1 or 2, wherein the first response comprises information used to indicate the M cells and system information corresponding to each of the M cells, or the first response comprises information used to indicate the M cells, information used to indicate a type of system information corresponding to each of the M cells, and the system information corresponding to each of the M cells.

4. The method according to any one of claims 1 to 3, wherein the access network element is an access network device, or the access network element is a distributed unit DU.

5. The method according to any one of claims 1 to 4, wherein the terminal is in idle mode, and the first request is media access control control element MAC CE signaling, a message 1 in a random access procedure, or a message 3 in a random access procedure; or the terminal is in connected mode, and the first request is radio resource control RRC signaling or MAC CE signaling.

6. A method for obtaining system information, comprising:
receiving (801), by a distributed unit, DU, a first request from a terminal, wherein the first request is used to request system information corresponding to N cells, and N is an integer greater than 1, wherein the N cells are covered by at least one DU each connected to at least one centralized unit, CU, wherein the system information comprises on-demand system information that has not been received by the terminal;
sending (802), by the DU, a second request to a first CU based on the first request, wherein the second request is used to request, for the terminal, the on-demand system information corresponding to the N cells;
receiving (803), by the DU, a second response from the first CU, wherein the second response comprises on-demand system information corresponding to M cells, the M cells comprise at least a part of the N cells, and M is an integer greater than 0; and
sending (804), by the DU, a first response to the terminal, wherein the first response comprises the on-demand system information corresponding to the M cells.

7. The method according to claim 6, wherein the first request and the second request comprise information used to indicate the N cells and information used to indicate a type of system information corresponding to each of the N cells, or the first request and the second request comprise information used to indicate the N cells.

8. The method according to claim 6 or 7, wherein the first response comprises information used to indicate the M cells and system information corresponding to each of the M cells; or information used to indicate the M cells, information used to indicate a type of system information corresponding to each of the M cells, and the system information corresponding to each of the M cells; and the second response comprises the information used to indicate the M cells and the system information corresponding to each of the M cells; or the second response comprises the information used to indicate the M cells and the information used to indicate the type of the system information corresponding to each of the M cells; or the second response comprises the information used to indicate the M cells, the information used to indicate the type of the system information corresponding to each of the M cells, and the system information corresponding to each of the M cells.

9. The method according to any one of claims 6 to 8, wherein the terminal is in idle mode, and the first request is a message 3 in a random access procedure; or the terminal is in connected mode, and the first request is radio resource control RRC signaling.

10. A method for obtaining system information, comprising:
receiving (802), by a first centralized unit CU, a second request from a distributed unit DU, wherein the second request is used to request, for a terminal, system information corresponding to N cells, and N is an integer greater than 1, wherein the N cells are covered by at least one DU each connected to at least one CU, wherein the system information is on-demand system information that has not been received by the terminal; and
sending (803), by the first CU, a second response to the DU based on the second request, wherein the second response comprises on-demand system information corresponding to M cells, the M cells comprise at least a part of the N cells, and M is an integer greater than 0.

11. The method according to claim 10, wherein the second request comprises information used to indicate the N cells and information used to indicate a type of system information corresponding to each of the N cells, or the second request comprises information used to indicate the N cells.

12. An apparatus for obtaining system information (170), comprising a communications unit (1702) and a processing unit (1701), wherein
the processing unit is configured to send a first request to an access network element by using the communications unit, wherein the first request is used to request system information corresponding to N cells, and N is an integer greater than 1, wherein the N cells are covered by at least one distributed unit each connected to at least one centralized unit, wherein the system information comprises on-demand system information that has not been received by the terminal; and
the processing unit is further configured to receive a first response from the access network element by using the communications unit, wherein the first response comprises the on-demand system information corresponding to M cells, the M cells comprise at least a part of the N cells, and M is an integer greater than 0.

13. An apparatus for obtaining system information (170), comprising a communications unit (1702) and a processing unit (1701), wherein
the processing unit is configured to receive a first request from a terminal by using the communications unit, wherein the first request is used to request system information corresponding to N cells, and N is an integer greater than 1, wherein the N cells are covered by at least one distributed unit each connected to at least one centralized unit, CU, wherein the system information comprises on-demand system information that has not been received by the terminal;
the processing unit is further configured to send a second request to a first CU based on the first request by using the communications unit, wherein the second request is used to request, for the terminal, the on-demand system information corresponding to the N cells;
the processing unit is further configured to receive a second response from the first CU by using the communications unit, wherein the second response comprises on-demand system information corresponding to M cells, the M cells comprise at least a part of the N cells, and M is an integer greater than 0; and
the processing unit is further configured to send a first response to the terminal by using the communications unit, wherein the first response comprises the on-demand system information corresponding to the M cells.

14. An apparatus for obtaining system information, comprising a communications unit and a processing unit, wherein
the processing unit is configured to receive a second request from a distributed unit DU by using the communications unit, the second request is used to request, for a terminal, system information corresponding to N cells, and N is an integer greater than 1, wherein the N cells are covered by at least one DU each connected to at least one centralized unit, wherein the system information is on-demand system information that has not been received by the terminal; and
the processing unit is further configured to send a second response to the DU based on the second request by using the communications unit, wherein the second response comprises on-demand system information corresponding to M cells, the M cells comprise at least a part of the N cells, and M is an integer greater than 0.

15. A computer-readable storage medium, comprising instructions, wherein when the instructions are run on a computer, the computer is enabled to perform the method according to any one of claims 1 to 5, perform the method according to any one of claims 6 to 9, or perform the method according to any one of claims 10 to 11.

## Patentansprüche

1. Verfahren zum Erlangen von Systeminformationen, umfassend:
Senden (201) einer ersten Anforderung an ein Zugangsnetzwerkelement durch ein Endgerät, wobei die erste Anforderung verwendet wird, um Systeminformationen anzufordern, die N Zellen entsprechen, und N eine ganze Zahl größer als 1 ist, wobei die N Zellen durch mindestens eine verteilte Einheit abgedeckt werden, die jeweils mit mindestens einer zentralen Einheit verbunden ist, wobei die Systeminformationen On-Demand-Systeminformationen umfassen, die nicht durch das Endgerät empfangen wurden; und
Empfangen (202) einer ersten Antwort von dem Zugangsnetzwerkelement durch das Endgerät, wobei die erste Antwort die On-Demand-Systeminformationen umfasst, die M Zellen entsprechen, die M Zellen mindestens einen Teil der N Zellen umfassen und M eine ganze Zahl größer als 0 ist.

2. Verfahren nach Anspruch 1, wobei die erste Anforderung Informationen, die verwendet werden, um die N Zellen anzugeben, und Informationen, die verwendet werden, um einen Typ von Systeminformationen anzugeben, die jeder der N Zellen entsprechen, umfasst oder die erste Anforderung Informationen umfasst, die verwendet werden, um die N Zellen anzugeben.

3. Verfahren nach Anspruch 1 oder 2, wobei die erste Antwort Informationen, die verwendet werden, um die M Zellen anzugeben, und Systeminformationen, die jeder der M Zellen entsprechen, umfasst oder die erste Antwort Informationen, die verwendet werden, um die M Zellen anzugeben, Informationen, die verwendet werden, um einen Typ von Systeminformationen anzugeben, die jeder der M Zellen entsprechen, und die Systeminformationen, die jeder der M Zellen entsprechen, umfasst.

4. Verfahren nach einem der Ansprüche 1 bis 3, wobei das Zugangsnetzwerkelement eine Zugangsnetzwerkvorrichtung ist oder das Zugangsnetzwerkelement eine verteilte Einheit DU ist.

5. Verfahren nach einem der Ansprüche 1 bis 4, wobei sich das Endgerät im Leerlaufmodus befindet und die erste Anforderung eine Signalisierung eines Steuerelements zur Medienzugriffssteuerung, MAC-CE-Signalisierung, eine Nachricht 1 in einer Direktzugriffsprozedur oder eine Nachricht 3 in einer Direktzugriffsprozedur ist; oder sich das Endgerät im verbundenen Modus befindet und die erste Anforderung eine Signalisierung zur Funkressourcensteuerung, RRC-Signalisierung, oder eine MAC-CE-Signalisierung ist.

6. Verfahren zum Erlangen von Systeminformationen, umfassend:
Empfangen (801) einer ersten Anforderung von einem Endgerät durch eine verteilte Einheit, DU, wobei die erste Anforderung verwendet wird, um Systeminformationen anzufordern, die N Zellen entsprechen, und N eine ganze Zahl größer als 1 ist, wobei die N Zellen durch mindestens eine DU abgedeckt werden, die jeweils mit mindestens einer zentralen Einheit, CU, verbunden ist, wobei die Systeminformationen On-Demand-Systeminformationen umfassen, die nicht durch das Endgerät empfangen wurden;
Senden (802) einer zweiten Anforderung durch die DU an eine erste CU basierend auf der ersten Anforderung, wobei die zweite Anforderung verwendet wird, um für das Endgerät die On-Demand-Systeminformationen anzufordern, die den N Zellen entsprechen;
Empfangen (803) einer zweiten Antwort von der ersten CU durch die DU, wobei die zweite Antwort On-Demand-Systeminformationen umfasst, die M Zellen entsprechen, die M Zellen mindestens einen Teil der N Zellen umfassen und M eine ganze Zahl größer als 0 ist; und
Senden (804) einer ersten Antwort durch die DU an das Endgerät, wobei die erste Antwort die On-Demand-Systeminformationen umfasst, die den M Zellen entsprechen.

7. Verfahren nach Anspruch 6, wobei die erste Anforderung und die zweite Anforderung Informationen, die verwendet werden, um die N Zellen anzugeben, und Informationen, die verwendet werden, um einen Typ von Systeminformationen, die jeder der N Zellen entsprechen, umfassen oder die erste Anforderung und die zweite Anforderung Informationen umfassen, die verwendet werden, um die N Zellen anzugeben.

8. Verfahren nach Anspruch 6 oder 7, wobei die erste Antwort Informationen, die verwendet werden, um die M Zellen anzugeben, und Systeminformationen, die jeder der M Zellen entsprechen; oder Informationen, die verwendet werden, um die M Zellen anzugeben, Informationen, die verwendet werden, um einen Typ von Systeminformationen anzugeben, die jeder der M Zellen entsprechen, und die Systeminformationen, die jeder der M Zellen entsprechen, umfasst; und die zweite Antwort die Informationen, die verwendet werden, um die M Zellen anzugeben, und die Systeminformationen, die jeder der M Zellen entsprechen, umfasst; oder die zweite Antwort die Informationen, die verwendet werden, um die M Zellen anzugeben, und die Informationen, die verwendet werden, um den Typ der Systeminformationen anzugeben, die jeder der M Zellen entsprechen, umfasst; oder die zweite Antwort die Informationen, die verwendet werden, um die M Zellen anzugeben, die Informationen, die verwendet werden, um den Typ der Systeminformationen anzugeben, die jeder der M Zellen entsprechen, und die Systeminformationen, die jeder der M Zellen entsprechen, umfasst.

9. Verfahren nach einem der Ansprüche 6 bis 8, wobei sich das Endgerät im Leerlauf befindet und die erste Anforderung eine Nachricht 3 in einer Direktzugriffsprozedur ist; oder sich das Endgerät im verbundenen Modus befindet und die erste Anforderung eine Signalisierung zur Funkressourcensteuerung RRC ist.

10. Verfahren zum Erlangen von Systeminformationen, umfassend:
Empfangen (802) einer zweiten Anforderung von einer verteilten Einheit DU durch eine erste zentrale Einheit CU, wobei die zweite Anforderung verwendet wird, um für ein Endgerät Systeminformationen anzufordern, die N Zellen entsprechen, und N eine ganze Zahl größer als 1 ist, wobei die N Zellen durch mindestens eine DU abgedeckt werden, die jeweils mit mindestens einer CU verbunden ist, wobei die Systeminformationen On-Demand-Systeminformationen sind, die nicht durch das Endgerät empfangen wurden; und
Senden (803) einer zweiten Antwort durch die erste CU an die DU basierend auf der zweiten Anforderung, wobei die zweite Antwort On-Demand-Systeminformationen umfasst, die M Zellen entsprechen, die M Zellen mindestens einen Teil der N Zellen umfassen und M eine ganze Zahl größer als 0 ist.

11. Verfahren nach Anspruch 10, wobei die erste Anforderung Informationen, die verwendet werden, um die N Zellen anzugeben, und Informationen, die verwendet werden, um einen Typ von Systeminformationen anzugeben, die jeder der N Zellen entsprechen, umfasst oder die zweite Anforderung Informationen umfasst, die verwendet werden, um die N Zellen anzugeben.

12. Einrichtung zum Erlangen von Systeminformationen (170), umfassend eine Kommunikationseinheit (1702) und eine Verarbeitungseinheit (1701), wobei
die Verarbeitungseinheit dazu konfiguriert ist, eine erste Anforderung an ein Zugangsnetzwerkelement unter Verwendung der Kommunikationseinheit zu senden, wobei die erste Anforderung verwendet wird, um Systeminformationen anzufordern, die N Zellen entsprechen, und N eine ganze Zahl größer als 1 ist, wobei die N Zellen durch mindestens eine verteilte Einheit abgedeckt werden, die jeweils mit mindestens einer zentralen Einheit verbunden ist, wobei die Systeminformationen On-Demand-Systeminformationen umfassen, die nicht durch das Endgerät empfangen wurden; und
die Verarbeitungseinheit ferner dazu konfiguriert ist, eine erste Antwort von dem Zugangsnetzwerkelement unter Verwendung der Kommunikationseinheit zu empfangen, wobei die erste Antwort die On-Demand-Systeminformationen umfasst, die M Zellen entsprechen, die M Zellen mindestens einen Teil der N Zellen umfassen und M eine ganze Zahl größer als 0 ist.

13. Einrichtung zum Erlangen von Systeminformationen (170), umfassend eine Kommunikationseinheit (1702) und eine Verarbeitungseinheit (1701), wobei
die Verarbeitungseinheit dazu konfiguriert ist, eine erste Anforderung von einem Endgerät unter Verwendung der Kommunikationseinheit zu empfangen, wobei die erste Anforderung verwendet wird, um Systeminformationen anzufordern, die N Zellen entsprechen, und N eine ganze Zahl größer als 1 ist, wobei die N Zellen durch mindestens eine verteilte Einheit abgedeckt werden, die jeweils mit mindestens einer zentralen Einheit, CU, verbunden ist, wobei die Systeminformationen On-Demand-Systeminformationen umfassen, die nicht durch das Endgerät empfangen wurden;
die Verarbeitungseinheit ferner dazu konfiguriert ist, basierend auf der ersten Anforderung eine zweite Anforderung an eine erste CU unter Verwendung der Kommunikationseinheit zu senden, wobei die zweite Anforderung verwendet wird, um für das Endgerät die On-Demand-Systeminformationen, die den N Zellen entsprechen, anzufordern;
die Verarbeitungseinheit ferner dazu konfiguriert ist, eine zweite Antwort von der ersten CU unter Verwendung der Kommunikationseinheit zu empfangen, wobei die zweite Antwort On-Demand-Systeminformationen umfasst, die M Zellen entsprechen, die M Zellen mindestens einen Teil der N Zellen umfassen und M eine ganze Zahl größer als 0 ist; und
die Verarbeitungseinheit ferner dazu konfiguriert ist, eine erste Antwort an das Endgerät unter Verwendung der Kommunikationseinheit zu senden, wobei die erste Antwort die On-Demand-Systeminformationen umfasst, die den M Zellen entsprechen.

14. Einrichtung zum Erlangen von Systeminformationen, umfassend eine Kommunikationseinheit und eine Verarbeitungseinheit, wobei die Verarbeitungseinheit dazu konfiguriert ist, eine zweite Anforderung von einer verteilten Einheit DU unter Verwendung der Kommunikationseinheit zu empfangen, die zweite Anforderung verwendet wird, um für ein Endgerät Systeminformationen anzufordern, die N Zellen entsprechen, und N eine ganze Zahl größer als 1 ist, wobei die N Zellen durch mindestens eine DU abgedeckt werden, die jeweils mit mindestens einer zentralen Einheit verbunden ist, wobei die Systeminformationen On-Demand-Systeminformationen sind, die nicht durch das Endgerät empfangen wurden; und
die Verarbeitungseinheit ferner dazu konfiguriert ist, basierend auf der zweiten Anforderung eine zweite Antwort an die DU unter Verwendung der Kommunikationseinheit zu senden, wobei die zweite Antwort On-Demand-Systeminformationen umfasst, die M Zellen entsprechen, die M Zellen mindestens einen Teil der N Zellen umfassen und M eine ganze Zahl größer als 0 ist.

15. Computerlesbares Speichermedium, umfassend Anweisungen, wobei, wenn die Anweisungen auf einem Computer ausgeführt werden, der Computer in die Lage versetzt wird, das Verfahren nach einem der Ansprüche 1 bis 5 durchzuführen, das Verfahren nach einem der Ansprüche 6 bis 9 durchzuführen oder das Verfahren nach einem der Ansprüche 10 bis 11 durchzuführen.

## Revendications

1. Procédé pour obtenir des informations de système, comprenant :
l'envoi (201), par un terminal, d'une première demande à un élément de réseau d'accès, dans lequel la première demande est utilisée pour demander des informations de système correspondant à N cellules, et N est un nombre entier supérieur à 1, dans lequel les N cellules sont couvertes par au moins une unité distribuée, chacune connectée à au moins une unité centralisée, dans lequel les informations de système comprennent des informations de système à la demande qui n'ont pas été reçues par le terminal ; et
la réception (202), par le terminal, d'une première réponse de l'élément de réseau d'accès, dans lequel la première réponse comprend les informations de système à la demande correspondant à M cellules, les M cellules comprennent au moins une partie des N cellules, et M est un entier supérieur à 0.

2. Procédé selon la revendication 1, dans lequel la première demande comprend les informations utilisées pour indiquer les N cellules et des informations utilisées pour indiquer un type d'informations de système correspondant à chacune des N cellules, ou la première demande comprend des informations utilisées pour indiquer les N cellules.

3. Procédé selon la revendication 1 ou 2, dans lequel la première réponse comprend des informations utilisées pour indiquer les M cellules et des informations de système correspondant à chacune des M cellules, ou la première réponse comprend des informations utilisées pour indiquer les M cellules, des informations utilisées pour indiquer un type d'informations de système correspondant à chacune des M cellules, et les informations de système correspondant à chacune des M cellules.

4. Procédé selon l'une quelconque des revendications 1 à 3, dans lequel l'élément de réseau d'accès est un dispositif de réseau d'accès, ou l'élément de réseau d'accès est une unité distribuée DU.

5. Procédé selon l'une quelconque des revendications 1 à 4, dans lequel le terminal est en mode veille, et la première demande est une signalisation d'élément de commande de commande d'accès au support CE MAC, un message 1 dans une procédure d'accès aléatoire, ou un message 3 dans une procédure d'accès aléatoire ; ou le terminal est en mode connecté, et la première demande est une signalisation de commande de ressources radio RRC ou une signalisation CE MAC.

6. Procédé pour obtenir des informations de système, comprenant :
la réception (801), par une unité distribuée, DU, d'une première demande provenant d'un terminal, dans lequel la première demande est utilisée pour demander des informations de système correspondant à N cellules, et N est un nombre entier supérieur à 1, dans lequel les N cellules sont couvertes par au moins une DU, chacune connectée à au moins une unité centralisée, CU, dans lequel les informations de système comprennent des informations de système à la demande qui n'ont pas été reçues par le terminal ;
l'envoi (802), par la DU, d'une seconde demande à une première CU sur la base de la première demande, dans lequel la seconde demande est utilisée pour demander, pour le terminal, les informations de système à la demande correspondant aux N cellules ;
la réception (803), par la DU, d'une seconde réponse provenant de la première CU, dans lequel la seconde réponse comprend les informations de système à la demande correspondant à M cellules, les M cellules comprennent au moins une partie des N cellules, et M est un nombre entier supérieur à 0 ; et
l'envoi (804), par la DU, d'une première réponse au terminal, dans lequel la première réponse comprend les informations de système à la demande correspondant aux M cellules.

7. Procédé selon la revendication 6, dans lequel la première demande et la seconde demande comprennent des informations utilisées pour indiquer les N cellules et des informations utilisées pour indiquer un type d'informations de système correspondant à chacune des N cellules, ou la première demande et la seconde demande comprennent des informations utilisées pour indiquer les N cellules.

8. Procédé selon la revendication 6 ou 7, dans lequel la première réponse comprend des informations utilisées pour indiquer les M cellules et des informations de système correspondant à chacune des M cellules ; ou des informations utilisées pour indiquer les M cellules, des informations utilisées pour indiquer un type d'informations de système correspondant à chacune des M cellules, et les informations de système correspondant à chacune des M cellules ; et la seconde réponse comprend les informations utilisées pour indiquer les M cellules et les informations de système correspondant à chacune des M cellules ; ou la seconde réponse comprend les informations utilisées pour indiquer les M cellules et les informations utilisées pour indiquer le type d'informations de système correspondant à chacune des M cellules ; ou la seconde réponse comprend les informations utilisées pour indiquer les M cellules, les informations utilisées pour indiquer le type des informations de système correspondant à chacune des M cellules, et les informations de système correspondant à chacune des M cellules.

9. Procédé selon l'une quelconque des revendications 6 à 8, dans lequel le terminal est en mode veille, et la première demande est un message 3 dans une procédure d'accès aléatoire ; ou le terminal est en mode connecté, et la première demande est une signalisation de commande de ressources radio RRC.

10. Procédé pour obtenir des informations de système comprenant :
la réception (802), par une première unité centralisée CU, d'une seconde demande provenant d'une unité distribuée DU, dans lequel la seconde demande est utilisée pour demander, pour un terminal, des informations de système correspondant à N cellules, et N est un nombre entier supérieur à 1, dans lequel les N cellules sont couvertes par au moins une DU, chacune connectée à au moins une CU, dans lequel les informations de système sont des informations de système à la demande qui n'ont pas été reçues par le terminal ; et
l'envoi (803), par la première CU, d'une seconde réponse à la DU, sur la base de la seconde demande, dans lequel la seconde réponse comprend des informations de système à la demande correspondant à M cellules, les M cellules comprennent au moins une partie des N cellules, et M est un nombre entier supérieur à 0.

11. Procédé selon la revendication 10, dans lequel la seconde demande comprend des informations utilisées pour indiquer les N cellules et des informations utilisées pour indiquer un type d'informations de système correspondant à chacune des N cellules, ou la seconde demande comprend des informations utilisées pour indiquer les N cellules.

12. Appareil pour obtenir des informations de système (170), comprenant une unité de communication (1702) et une unité de traitement (1701), dans lequel
l'unité de traitement est configurée pour envoyer une première demande à un élément de réseau d'accès à l'aide de l'unité de communication, dans lequel la première demande est utilisée pour demander des informations de système correspondant à N cellules, et N est un nombre entier supérieur à 1, dans lequel les N cellules sont couvertes par au moins une unité distribuée, chacune connectée à au moins une unité centralisée, dans lequel les informations de système comprennent des informations de système à la demande qui n'ont pas été reçues par le terminal ; et
l'unité de traitement est en outre configurée pour recevoir une première réponse de l'élément de réseau d'accès en utilisant l'unité de communication, dans lequel la première réponse comprend les informations de système à la demande correspondant à M cellules, les M cellules comprennent au moins une partie des N cellules, et M est un entier supérieur à 0.

13. Appareil pour obtenir des informations de système (170), comprenant une unité de communication (1702) et une unité de traitement (1701), dans lequel
l'unité de traitement est configurée pour recevoir une première demande d'un terminal à l'aide de l'unité de communication, dans lequel la première demande est utilisée pour demander des informations de système correspondant à N cellules, et N est un nombre entier supérieur à 1, dans lequel les N cellules sont couvertes par au moins une unité distribuée, chacune connectée à au moins une unité centralisée, CU, dans lequel les informations de système comprennent des informations de système à la demande qui n'ont pas été reçues par le terminal ;
l'unité de traitement est en outre configurée pour envoyer une seconde demande à une première CU sur la base de la première demande en utilisant l'unité de communication, dans lequel la seconde demande est utilisée pour demander, pour le terminal, les informations de système à la demande correspondant aux N cellules ;
l'unité de traitement est en outre configurée pour recevoir une seconde réponse de la première CU en utilisant l'unité de communication, dans lequel la seconde réponse comprend des informations de système à la demande correspondant à M cellules, les M cellules comprennent au moins une partie des N cellules, et M est un entier supérieur à 0 ; et
l'unité de traitement est en outre configurée pour envoyer une première réponse au terminal en utilisant l'unité de communication, dans lequel la première réponse comprend les informations de système à la demande correspondant aux M cellules.

14. Appareil pour obtenir des informations de système, comprenant une unité de communication et une unité de traitement, dans lequel
l'unité de traitement est configurée pour recevoir une seconde demande d'une unité distribuée DU en utilisant l'unité de communication, la seconde demande est utilisée pour demander, pour un terminal, des informations de système correspondant à N cellules, et N est un nombre entier supérieur à 1, dans lequel les N cellules sont couvertes par au moins une DU, chacune connectée à au moins une unité centralisée, dans lequel les informations de système sont des informations de système à la demande qui n'ont pas été reçues par le terminal ; et
l'unité de traitement est en outre configurée pour envoyer une seconde réponse à la DU sur la base de la seconde demande en utilisant l'unité de communication, dans lequel la seconde réponse comprend des informations de système à la demande correspondant à M cellules, les M cellules comprennent au moins une partie des N cellules, et M est un entier supérieur à 0.

15. Support de stockage lisible par ordinateur, comprenant des instructions, dans lequel, lorsque les instructions sont exécutées sur un ordinateur, l'ordinateur est activé pour exécuter le procédé selon l'une quelconque des revendications 1 à 5, pour exécuter le procédé selon l'une quelconque des revendications 6 à 9, ou pour exécuter le procédé selon l'une quelconque des revendications 10 et 11.
